(19) Europäisches Patentamt / European Patent Office / Office européen des brevets

(11) **EP 2 312 185 A2**

(12) **EUROPEAN PATENT APPLICATION**

(43) Date of publication:
 **20.04.2011 Bulletin 2011/16**

(51) Int Cl.:
 ***F16H 47/02*** *(2006.01)*

(21) Application number: **10187242.2**

(22) Date of filing: **12.10.2010**

(84) Designated Contracting States:
 **AL AT BE BG CH CY CZ DE DK EE ES FI FR GB GR HR HU IE IS IT LI LT LU LV MC MK MT NL NO PL PT RO RS SE SI SK SM TR**
 Designated Extension States:
 **BA ME**

(30) Priority: **13.10.2009 JP 2009236141**

(71) Applicants:
 • **Kabushiki Kaisha Kobe Seiko Sho (Kobe Steel, Ltd.)**
 **Kobe-shi,**
 **Hyogo 651-8585 (JP)**
 • **Kobelco Cranes Co., Ltd.**
 **Tokyo 141-8626 (JP)**

(72) Inventors:
 • **Sugano, Naoki**
 **Kobe-shi Hyogo 651-2271 (JP)**
 • **Hori, Naoto**
 **Kobe-shi Hyogo 651-2271 (JP)**
 • **Kobayashi, Takahiro**
 **Akashi-shi Hyogo 674-0063 (JP)**
 • **Kondo, Hiroo**
 **Akashi-shi Hyogo 674-0063 (JP)**

(74) Representative: **TBK-Patent**
 **Bavariaring 4-6**
 **80336 München (DE)**

(54) **Hydraulic traveling vehicle**

(57) A hydraulic traveling vehicle includes: an engine; wheels; a wheel shaft connected to the wheels; a hydraulic pump driven by the engine and thereby discharging a hydraulic oil; a first hydraulic motor and a second hydraulic motor actuated by a hydraulic pressure of the hydraulic oil discharged from the hydraulic pump and thereby generating drive power; a combining mechanism that can combine drive power generated by the first hydraulic motor and drive power generated by the second hydraulic motor, and a transmission mechanism that transmits drive power obtained from the combining mechanism to the wheel shaft so as to rotate the wheel shaft and the wheels. The second hydraulic motor is a variable displacement hydraulic motor that has a variable capacity; the combining mechanism includes a first rotating shaft that is connected to the transmission mechanism and is rotated by drive power generated by the first hydraulic motor, a second rotating shaft that is disposed coaxially with the first rotating shaft and is rotated in the same rotation direction as the first rotating shaft by drive power generated by the second hydraulic motor, and a first clutch having a first engagement portion that is joined to the first rotating shaft so as to rotate integrally with the first rotating shaft and a second engagement portion that is joined to the second rotating shaft so as to rotate integrally with the second rotating shaft; the first engagement portion and the second engagement portion can rotate in a rotation direction causing the hydraulic traveling vehicle to move forward when rotation power of the first engagement portion and the second engagement portion is transmitted to the wheels, and the first engagement portion is disposed with respect to the second engagement portion in such a manner that when a rotation speed of the second engagement portion in the rotation direction causing the hydraulic traveling vehicle to move forward increases and reaches a rotation speed equal to a rotation speed of the first engagement portion in the same rotation direction, the first engagement portion rotates integrally with the second engagement portion, while, when the rotation speed of the second engagement portion in the rotation direction causing the hydraulic traveling vehicle to move forward is below the rotation speed of the first engagement portion in the same rotation direction, the first engagement portion idles with respect to the second engagement portion.

# FIG. 1

**Description**

Background of the Invention

1. Field of the Invention

The present invention relates to a hydraulic traveling vehicle.

2. Background Art

A hydraulic traveling vehicle using the so-called HST (Hydro-Static Transmission) traveling system is known. With the HST traveling system, a hydraulic pump is driven by power of an engine, a hydraulic motor is driven by a hydraulic pressure supplied by the driven hydraulic pump, and vehicle wheels are rotated by drive power generated by the driven hydraulic motor, thereby causing the vehicle to travel.

Such a hydraulic traveling vehicle requires a large torque during acceleration, but after the vehicle speed has reached a constant traveling speed, the large torque becomes unnecessary. For this reason, in such a hydraulic traveling vehicle, the capacity control of a hydraulic motor is usually performed such that the capacity of a variable displacement hydraulic motor is increased to obtain a large torque from this hydraulic motor during acceleration, and after the traveling speed has reached a constant speed, the capacity of the hydraulic motor is reduced to decrease the torque.

However, when a vehicle is provided with a single variable displacement hydraulic motor that has a high maximum capacity and the capacity control is performed with respect to this hydraulic motor, after the vehicle speed has reached a constant speed, the hydraulic motor operates in a state with a capacity much lower than the maximum capacity. As a result, drive efficiency of the hydraulic motor is degraded.

Further, a configuration is also known in which a vehicle is provided with a plurality of hydraulic motors each having a comparatively low maximum capacity, a large torque is obtained during vehicle acceleration by combining the drive power of the plurality of hydraulic motors, and after the vehicle speed has reached a constant speed, the capacity of some hydraulic motors from among the plurality of hydraulic motors is zeroed and the capacity of the remaining hydraulic motors is decreased to a predetermined level, thereby causing the vehicle to travel with a low torque. With such a configuration, after the vehicle speed has reached a constant speed, the remaining hydraulic motors are operated at a capacity that is not that low for these hydraulic motors and therefore the drive efficiency of the hydraulic motors is increased by comparison with that in the case in which the vehicle is caused to travel by drive power of a single hydraulic motor having a high maximum capacity.

However, in such a configuration, after the vehicle speed has reached a constant speed, the aforementioned some hydraulic motors for which the capacity became zero idle in a state in which they are connected to the wheel shaft and therefore unnecessary power is used due to the idling of the hydraulic motors. As a result, a problem associated with the difficulty of further increasing drive efficiency (improving fuel consumption) of the entire vehicle still remains to be solved.

Japanese Translation of PCT Application No. H4-501992 and Japanese Patent Application Laid-open 2001-336602 disclose techniques capable of resolving this problem.

With the technique described in Japanese Translation of PCT Application No. H4-501992, variable displacement hydraulic motors are connected to a wheel shaft connected to each of a plurality of vehicle wheels. Some hydraulic motors from among the plurality of hydraulic motors are connected to the wheel shaft via clutches. With this technique, when the vehicle accelerates, a control signal is inputted from the outside to each clutch and the clutch that has received the control signal assumes the engaged state. Drive power of each hydraulic motor corresponding to each clutch that has assumed the engaged state is transmitted via the clutches to the wheel shaft, thereby providing a large torque for causing the vehicle to travel. After the vehicle speed has reached a constant speed, a control signal is inputted from the outside to the hydraulic motors connected via the clutches to the wheel shaft and the capacity of the hydraulic motors is accordingly reduced to zero. Further, a control signal is also inputted from the outside to each clutch, and the clutches that have received the control signals assume a disengaged state. As a result, after the vehicle speed has reached a constant speed, the hydraulic motors with a zeroed capacity are disengaged from the wheel shaft and consumption of unnecessary power caused by idling of the hydraulic motors is eliminated. As a result, fuel consumption is improved.

With the technique described in Japanese Patent Application Laid-open No. 2001-336602, two variable displacement hydraulic motors are connected via gear trains to a wheel shaft. One hydraulic motor from among these two hydraulic motors is connected to the gear train via a clutch. The gear train combines the drive powers of the two hydraulic motors and transmits the combined drive power to the wheel shaft. The clutch is switched between a disengaged state and an engaged state by a control unit according to the value of a torque necessary to move the vehicle. With this technique, where the torque necessary to move the vehicle decreases as the vehicle accelerates, the capacity of the one hydraulic motor is reduced to zero and the control unit disengages the clutch. As a result, the one hydraulic motor

EP 2 312 185 A2

with a zeroed capacity is disconnected from the gear train. Therefore, with this technique, consumption of unnecessary power caused by idling of the one hydraulic motor is eliminated and fuel consumption can be improved in the same manner as with the technique described in Japanese Translation of PCT Application No. H4-501992.

However, with the technique described in Japanese Translation of PCT Application No. H4-501992 and the technique described in Japanese Patent Application Laid-open No. 2001-336602, timing of engagement and disengagement of clutches can cause a variety of problems such as breakage of the hydraulic motor, occurrence of shocks, and breakage of the clutches.

More specifically, with the above-described techniques, the capacity control of the hydraulic motors and the engagement-disengagement switching control of the clutches are performed simultaneously. In this case, a time lag occurs from a point of time at which a control signal for capacity control is inputted to the hydraulic motor to the point of time at which the capacity of the hydraulic motor actually changes to the capacity designated by the control signal. Therefore, for example, where the clutch is disengaged simultaneously with the input of the control signal to the hydraulic motor when the capacity control is performed by which the capacity of the hydraulic motor is reduced from the predetermined capacity to zero, the clutch can be disengaged while the capacity of the hydraulic motor has not yet actually decreased. In this case, over-rotation occurs in the hydraulic motor disconnected from the wheel shaft. As a result, the hydraulic motor can be damaged.

Further, a time lag also occurs between a point of time at which the capacity of the hydraulic motor changes and a point of time at which the rotation speed of the hydraulic motor becomes the rotation speed corresponding to the changed capacity. Therefore, from the point of time at which a control signal for the capacity control is inputted to the hydraulic motor and to the point of time at which the rotation speed of the hydraulic motor becomes the rotation speed corresponding to the capacity designated by the control signal, a lag occurs that is a sum total of the time lag from the input of the control signal to the hydraulic motor to the point of time at which the capacity of the hydraulic motor actually changes to the capacity designated by the control signal and the time lag from the point in time at which the capacity of the hydraulic motor changes to the point of time at which the rotation speed of the hydraulic motor becomes the rotation speed corresponding to the changed capacity. Therefore, where the input of the control signal to the hydraulic motor and the engagement of the clutch are performed simultaneously when clutch engagement is performed together with the capacity control by which the capacity of the hydraulic motor is raised from zero when the wheel shaft is driven at a predetermined rotation speed, the clutch can be engaged before the rotation speed of the hydraulic motor rises to the rotation speed equal to the rotation speed of the wheel shaft. In this case, the clutch engagement is accompanied by shocks, ride quality is degraded, and the clutch can be damaged.

Summary of the Invention

It is an object of the present invention to provide a hydraulic traveling vehicle that resolves the above-described problems.

It is another object of the present invention to inhibit breakage of hydraulic motors, occurrence of shocks, and breakage of a clutch caused by engagement and disengagement of the clutch in a hydraulic traveling vehicle that is driven by a plurality of hydraulic motors.

The hydraulic traveling vehicle according to one aspect of the present invention includes an engine; wheels; a wheel shaft connected to the wheels; a hydraulic pump driven by the engine and thereby discharging a hydraulic oil; a first hydraulic motor and a second hydraulic motor actuated by a hydraulic pressure of the hydraulic oil discharged from the hydraulic pump and thereby generating drive power; a combining mechanism that can combine drive power generated by the first hydraulic motor and drive power generated by the second hydraulic motor, and a transmission mechanism that transmits drive power obtained from the combining mechanism to the wheel shaft so as to rotate the wheel shaft and the wheels, wherein the second hydraulic motor is a variable displacement hydraulic motor that has a variable capacity; the combining mechanism includes a first rotating shaft that is connected to the transmission mechanism and is rotated by drive power generated by the first hydraulic motor, a second rotating shaft that is disposed coaxially with the first rotating shaft and is rotated in the same rotation direction as the first rotating shaft by drive power generated by the second hydraulic motor, and a first clutch having a first engagement portion that is joined to the first rotating shaft so as to rotate integrally with the first rotating shaft and a second engagement portion that is joined to the second rotating shaft so as to rotate integrally with the second rotating shaft; the first engagement portion and the second engagement portion can rotate in a rotation direction causing the hydraulic traveling vehicle to move forward when rotation powers of the first engagement portion and the second engagement portion are transmitted to the wheels, and the first engagement portion is disposed with respect to the second engagement portion in such a manner that when a rotation speed of the second engagement portion in the rotation direction causing the hydraulic traveling vehicle to move forward increases and reaches a rotation speed equal to a rotation speed of the first engagement portion in the same rotation direction, the first engagement portion rotates integrally with the second engagement portion, while, when the rotation speed of the second engagement portion in the rotation direction causing the hydraulic traveling vehicle to move forward is below the rotation speed of the first engagement portion in the same rotation direction, the first engagement portion idles with respect to the second engagement portion.

In such hydraulic traveling vehicle, when the rotation speed of the second engagement portion in the rotation direction causing the hydraulic traveling vehicle to move forward increases and reaches a rotation speed equal to the rotation speed of the first engagement portion in the same direction, the first engagement portion and the second engagement portion rotate integrally, and when the rotation speed of the second engagement portion in the rotation direction causing the hydraulic traveling vehicle to move forward decreases below the rotation speed of the first engagement portion in the same rotation direction, the first engagement portion idles with respect to the second engagement portion. Therefore, when the capacity control that increases the capacity of the second hydraulic motor from zero is performed in a state in which the first hydraulic motor operates and the first rotating shaft and the first engagement portion rotate at a predetermined rotation speed and also in a state in which the first engagement portion idles with respect to the second engagement portion, if the rotation speed of the second hydraulic motor rises and the rotation speed of the second rotating shaft and the rotation speed of the second engagement portion are thereby caused to reach the rotation speed equal to the rotation speed of the first engagement portion, the first engagement portion and the second engagement portion rotate integrally. Since the rotation speeds of the two engagement portions are equal in this case, occurrence of shocks caused by the difference in rotation speed between the two engagement portions when the first clutch engages is inhibited and the first clutch is prevented from damage.

Further, in such hydraulic traveling vehicle, when the capacity control is performed to reduce the capacity of the second hydraulic motor to zero in a state in which the first hydraulic motor and the second hydraulic motor operate and the first engagement portion and the second engagement portion of the first clutch rotate integrally, if the rotation speed of the second hydraulic motor decreases and the rotation speed of the second rotating shaft and the rotation speed of the second engagement portion are thereby caused to become below the rotation speed of the first engagement portion, the first clutch assumes a disengaged state and the first engagement portion idles with respect to the second engagement portion. In this case, since the capacity of the second hydraulic motor has already decreased, the second hydraulic motor is prevented from over-rotating. As a result, breakage of the second hydraulic motor caused by over-rotation of the second hydraulic motor can be prevented. Therefore, with such a configuration, it is possible to prevent breakage of the second hydraulic motor, occurrence of shocks, and damage of the first clutch caused by engagement and disengagement of the first clutch in a hydraulic traveling vehicle that is driven by driving of a plurality of hydraulic motors.

Further, in such hydraulic traveling vehicle, the first clutch is engaged and disengaged by using a relative rotation speed difference of the first engagement portion and second engagement portion. Therefore, by contrast with the conventional configuration in which a clutch is engaged and disengaged by inputting control signals to the clutch from the outside, a lag from the instant at which the rising rotation speed of the second rotating shaft reaches a rotation speed equal to the rotation speed of the first rotating shaft to the instant at which the first clutch actually assumes the engaged state and a lag from the instant at which the rotation speed of the second rotating shaft decreases below the rotation speed of the first rotating shaft to the instant at which the first clutch actually assumes the disengaged state are extremely small. As a result, breakage of the second hydraulic motor, occurrence of shocks, and damage of the first clutch caused by such lags can be reliably prevented.

In the hydraulic traveling vehicle, the first engagement portion and the second engagement portion can rotate in a rotation direction that is opposite to the rotation direction causing the hydraulic traveling vehicle to move forward and that causes the hydraulic traveling vehicle to move rearward when rotation powers of the first engagement portion and the second engagement portion are transmitted to the wheels; when a rotation speed of the first engagement portion in the rotation direction causing the hydraulic traveling vehicle to move rearward increases and reaches a rotation speed equal to a rotation speed of the second engagement portion in the same rotation direction, the second engagement portion rotates integrally with the first engagement portion, while when the rotation speed of the first engagement portion in the rotation direction causing the hydraulic traveling vehicle to move rearward is below the rotation speed of the second engagement portion in the same rotation direction, the second engagement portion idles with respect to the first engagement portion; the combining mechanism includes, in addition to the first clutch, a second clutch that is provided so as to straddle the first rotating shaft and the second rotating shaft and is switched between an engaged state in which the first rotating shaft and the second rotating shaft are connected and a disengaged state in which the first rotating shaft and the second rotating shaft are disconnected; the hydraulic traveling vehicle further includes a forward-rearward switching unit that can be switched between a forward position for designating forward movement of the hydraulic traveling vehicle and rearward position for designating rearward movement of the hydraulic traveling vehicle, and a control device that sends, to the second clutch, a disengaged state instruction signal for instructing the second clutch to assume the disengaged state in response to switching of the forward-rearward switching unit to the forward position, and sends, to the second clutch, an engaged state instruction signal for instructing the second clutch to assume the engaged state in response to switching of the forward-rearward switching unit to the rearward position, and the second clutch assumes the disengaged state when the disengaged state instruction signal is inputted and assumes the engaged state when the engaged state instruction signal is inputted.

With such a configuration, when the rotation speed of the first engagement portion in the rotation direction causing the vehicle to move rearward is below the rotation speed of the second engagement portion in the same rotation direction, the second engagement portion idles with respect to the first engagement portion. Therefore, in the case in which the rotation speed of the second hydraulic motor is higher than the rotation speed of the first hydraulic motor when the vehicle moves rearward, drive power of the second hydraulic motor cannot be transmitted from the second rotating shaft to the transmission unit via the first clutch. However, with the above-described configuration, when the vehicle moves rearward, the second clutch is in the engaged state and therefore drive power of the second hydraulic motor can be transmitted from the second rotating shaft to the transmission unit via the second clutch and the first rotating shaft. As result, when the vehicle moves rearward, drive power of the second hydraulic motor can be transmitted to the wheel shaft and the vehicle can be moved rearward by drive power of both the second hydraulic motor and the first hydraulic motor. Further, with such a configuration, when the vehicle moves forward, the second clutch is in the disengaged state and therefore the effect similar to that of the above-described hydraulic traveling vehicle can be obtained by engaging and disengaging the first clutch.

In the preferred configuration of the above-described hydraulic traveling vehicle, the transmission mechanism includes a reducer that reduces speed given by the drive power obtained from the combining mechanism at a predetermined high reduction ratio and at a low reduction ratio that is a speed reduction ratio lower than the high reduction ratio, and a transmission unit that is switched between a high-reduction transmission state for transmitting drive power reduced by the reducer at the high reduction ratio to the wheel shaft and a low-reduction transmission state for transmitting drive power reduced at the low reduction ratio to the wheel shaft; the hydraulic traveling vehicle further includes a reduction ratio switching device that has a reduction ratio switching unit capable of being switched between a high-reduction designation position and a low-reduction designation position, that outputs, to the transmission unit, a high-reduction instruction signal for instructing the transmission unit to assume the high-reduction transmission state in response to switching of the reduction ratio switching unit to the high-reduction designation position, and that outputs, to the transmission unit, a low-reduction instruction signal for instructing the transmission unit to assume the low-reduction transmission state in response to switching of the reduction ratio switching unit to the low-reduction designation position, and the transmission unit assumes the high-reduction transmission state when the high-reduction instruction signal is inputted and assumes the low-reduction transmission state when the low-reduction instruction signal is inputted.

With such configuration, a high reduction ratio or a low reduction ratio can be selected by the operator by operating the reduction ratio switching unit, and the drive power that its speed is reduced by the reducer at the selected reduction ratio is transmitted to the wheel shaft. Therefore, with such configuration, the operator can select either of the high reduction ratio and the low reduction ratio and cause the vehicle to travel at the selected reduction ratio.

It is preferred that in the above-described configuration, the reducer include a first gear device mounted on the first rotating shaft and serving to reduce speed given by the rotation power of the first rotating shaft at the low reduction ratio, and a second gear device mounted on the second rotating shaft and serving to reduce speed given by the rotation power of the second rotating shaft at the high reduction ratio, and when the transmission unit is in the low-reduction transmission state, the transmission unit is joined to the first gear device so as to transmit the rotation power that its speed is reduced by the first gear device from the first gear device to the wheel shaft, and when the transmission device is in the high-reduction transmission state, the transmission unit is joined to the second gear device so as to transmit the rotation power that its speed is reduced by the second gear device from the second gear device to the wheel shaft.

With such a configuration, it is possible to obtain a specific configuration of the reducer that can reduce the speed given by the drive power outputted from the combining mechanism at a high reduction ratio and a low reduction ratio, and it is also possible to obtain a specific configuration of the transmission unit that can be switched between a high-reduction transmission state for transmitting drive power reduced by the reducer at the high reduction ratio to the wheel shaft and a low-reduction transmission state for transmitting drive power reduced by the reducer at the low reduction ratio to the wheel shaft. Further, with the above-described configuration, since the second gear device is mounted on the second rotating shaft, when the capacity of the second hydraulic motor is reduced to zero, the rotation speed of the second engagement portion of the first clutch in the direction causing the vehicle to move forward decreases below the rotation speed of the first engagement portion in the same rotation direction, the first engagement portion of the first clutch idles accordingly with respect to the second engagement portion, and then the rotation of the second engagement portion and second rotating shaft can be stopped and the drive of the second gear device can be stopped. Therefore, idle loss of the second gear device can be eliminated and increase in fuel consumption can be inhibited.

It is preferred that the above-described configuration further include a supply pipe connected to a discharge port of the hydraulic pump; a first introducing pipe connected to the supply pipe and introducing the hydraulic oil discharged from the hydraulic pump to the supply pipe, into the first hydraulic motor, and a second introducing pipe connected to the supply pipe and introducing the hydraulic oil discharged from the hydraulic pump to the supply pipe, into the second hydraulic motor.

With such configuration, the first introducing pipe and the second introducing pipe are connected to a common supply pipe. Therefore, the hydraulic oil discharged from the hydraulic pump to the supply pipe is naturally distributed in equal amounts to the first introducing pipe and the second introducing pipe. As a result, the rotation speed of the first hydraulic motor and the rotation speed of the second hydraulic motor can be easily synchronized.

As described hereinabove, with the embodiments and variation examples thereof, it is possible to inhibit breakage of hydraulic motors, occurrence of shocks, and breakage of a clutch caused by engagement and disengagement of the clutch in a hydraulic traveling vehicle that is driven by driving of a plurality of hydraulic motors.

Brief Description of the Drawings

FIG. 1 illustrates a drive system of a hydraulic traveling vehicle according to the first embodiment of the present invention;

FIG. 2 illustrates the correlation between the oil pressure inside the supply pipe and the capacity of the first hydraulic motor in the hydraulic traveling vehicle according to the first embodiment;

FIG. 3 illustrates the correlation between the oil pressure inside the supply pipe and the capacity of the second hydraulic motor in the hydraulic traveling vehicle according to the first embodiment;

FIG. 4 shows correlation diagrams of vehicle speed, hydraulic pressure inside the supply pipe, capacity of the first hydraulic motor, capacity of the second hydraulic motor, rotation speed of the first hydraulic motor and second hydraulic motor, and clutch state versus the elapsed time during acceleration of the hydraulic traveling vehicle according to the first embodiment;

FIG. 5 shows correlation diagrams of vehicle speed, hydraulic pressure inside the supply pipe, capacity of the first hydraulic motor, capacity of the second hydraulic motor, rotation speed of the first hydraulic motor and second hydraulic motor, and clutch state versus the elapsed time during deceleration of the hydraulic traveling vehicle according to the first embodiment;

FIG. 6 shows a drive system of a hydraulic traveling vehicle according to a comparative example that illustrates the effect of the hydraulic traveling vehicle of the first embodiment;

FIG. 7 illustrates the correlation between the oil pressure inside the supply pipe and the capacity of the first hydraulic motor in the hydraulic traveling vehicle according to the comparative example shown in FIG. 6;

FIG. 8 illustrates the correlation between the oil pressure inside the supply pipe and the capacity of the second hydraulic motor in the hydraulic traveling vehicle according to the comparative example shown in FIG. 6;

FIG. 9 illustrates a drive system of a hydraulic traveling vehicle according to the second embodiment of the present invention;

FIG. 10 illustrates a drive system of a hydraulic traveling vehicle according to the third embodiment of the present invention;

FIG. 11 illustrates a drive system of a hydraulic traveling vehicle according to the fourth embodiment of the present invention;

FIG. 12 illustrates a drive system of a hydraulic traveling vehicle according to the fifth embodiment of the present invention; and

FIG. 13 illustrates a drive system of a hydraulic traveling vehicle according to the sixth embodiment of the present invention.

Detailed Description of the Preferred Embodiments of the Invention

The preferred embodiments of the present invention will be described below with reference to the appended drawings.

First Embodiment

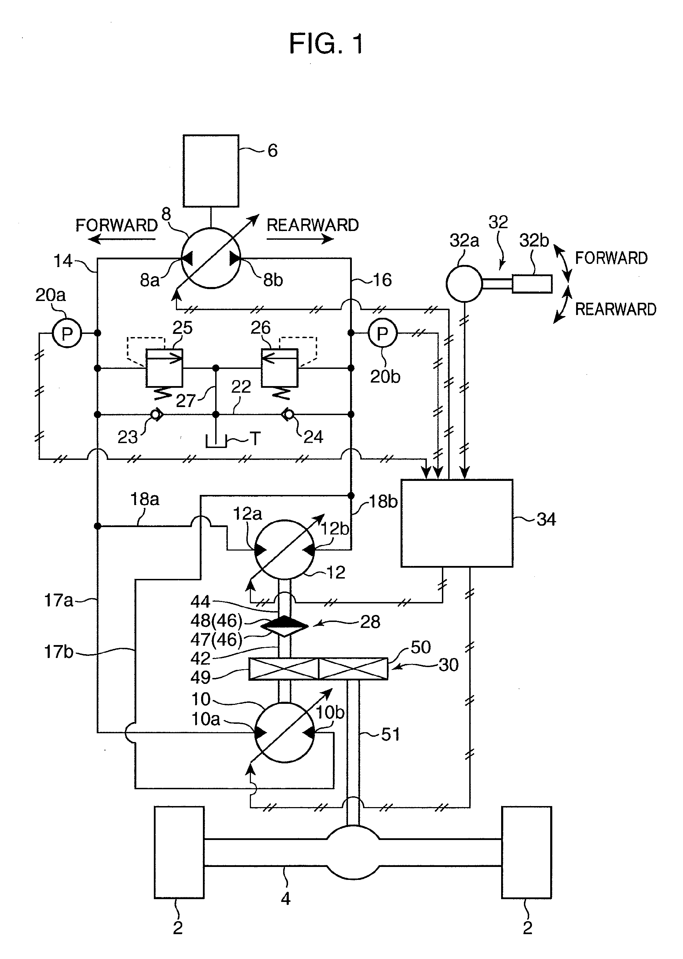

A configuration of the hydraulic traveling vehicle according to the first embodiment of the present invention will be explained below with reference to FIG. 1.

The hydraulic traveling vehicle according to the first embodiment uses a HST traveling system. Thus, in the hydraulic traveling vehicle, a hydraulic pump 8 is driven by power of an engine 6, hydraulic motors 10, 12 are driven by a hydraulic pressure supplied by the hydraulic pump 8, and drive power generated by the hydraulic motors 10, 12 rotates wheels 2 and causes the vehicle to travel.

More specifically, as shown in FIG. 1, the hydraulic traveling vehicle of the first embodiment includes the wheels 2, a wheel shaft 4, the engine 6, an accelerator device (not shown in the figure), the hydraulic pump 8, a first hydraulic motor 10, a second hydraulic motor 12, a first pipe 14, a second pipe 16, supply-discharge pipes 17a, 17b, 18a, 18b, a first pressure sensor 20a, a second pressure sensor 20b, a connection pipe 22, a first check valve 23, a second check valve 24, a first relief valve 25, a second relief valve 26, a discharge pipe 27, a combining mechanism 28, a transmission mechanism 30, a forward-rearward switching device 32, and a control unit 34.

The wheel shaft 4 is connected to the wheels 2. More specifically, the wheel shaft 4 extends in the transverse direction of the vehicle, and the wheels 2 are mounted on both ends of the vehicle shaft 4. The wheels 2 and the wheel shaft 4 rotate integrally when the vehicle travels.

The engine 6 is connected to the hydraulic pump 8 so that the drive power of the engine 6 is transmitted to the hydraulic pump 8.

The accelerator device (not shown in the figure) is connected to the engine 6. The accelerator device is operated by an operator. The accelerator device increases or decreases the rotation speed of the engine 6 in response to the increase or decrease of the operation amount of the accelerator device.

The hydraulic pump 8 is driven by the power of the engine 6 and, when driven, discharges hydraulic oil. The hydraulic pump 8 is of a variable displacement type and a bidirectional discharge type. The hydraulic pump 8 has a one-side supply-discharge port 8a and an other-side supply-discharge port 8b. Further, the hydraulic pump 8 changes its own capacity and discharge direction of the hydraulic oil in response to control signals outputted from the control unit 34. The hydraulic pump 8 receives control signals outputted from the control unit 34 when the vehicle travels forward and discharges the hydraulic oil from the one-side supply-discharge port 8a accordingly and receives control signals outputted from the control unit 34 when the vehicle travels rearward and discharges the hydraulic oil from the other-side supply-discharge port 8b accordingly.

The first hydraulic motor 10 and the second hydraulic motor 12 are driven by a hydraulic pressure of the hydraulic oil discharged from the hydraulic pump 8, and thereby generates drive power. The first hydraulic motor 10 and the second hydraulic motor 12 are variable displacement hydraulic motors having variable capacity. The first hydraulic motor 10 has a one-side supply-discharge port 10a and an other-side supply-discharge port 10b. The second hydraulic motor 12 has a one-side supply-discharge port 12a and an other-side supply-discharge port 12b. The capacity of the first hydraulic motor 10 is changed by inputting a control signal from the control unit 34 to the first hydraulic motor 10, and the capacity of the second hydraulic motor 12 is changed by inputting a control signal from the control unit 34 to the second hydraulic motor 12.

The first pipe 14 is connected to the one-side supply-discharge port 8a of the hydraulic pump 8, and the second pipe 16 is connected to the other-side supply-discharge port 8b of the hydraulic pump 8. The first pipe 14 is included in the concept of "supply pipe" in accordance with the present invention.

The supply-discharge pipe 17a, from between the supply-discharge pipes 17a, 17b, serves to introduce the hydraulic oil discharged from the hydraulic pump 8 into the first pipe 14 into the one-side supply-discharge port 10a of the first hydraulic motor 10 and return the hydraulic oil discharged from the one-side supply-discharge port 10a of the first hydraulic motor 10 to the first pipe 14. This supply-discharge pipe 17a is included in the concept of "first introducing pipe" in accordance with the present invention. One end of the supply-discharge pipe 17a is connected to the first pipe 14, and the other end of the supply-discharge pipe 17a is connected to the one-side supply-discharge port 10a of the first hydraulic motor 10.

The other supply-discharge pipe 17b, from among the supply-discharge pipes 17a, 17b, serves to introduce the hydraulic oil discharged from the hydraulic pump 8 into the second pipe 16 into the other-side supply-discharge port 10b of the first hydraulic motor 10 and return the hydraulic oil discharged from the other-side supply-discharge port 10b of the first hydraulic motor 10 to the second pipe 16. One end of the other supply-discharge pipe 17b is connected to the second pipe 16, and the other end of the other supply-discharge pipe 17b is connected to the other-side supply-discharge port 10b of the first hydraulic motor 10.

The supply-discharge pipe 18a, from among the supply-discharge pipes 18a, 18b, serves to introduce the hydraulic oil discharged from the hydraulic pump 8 into the first pipe 14 into the one-side supply-discharge port 12a of the second hydraulic motor 12 and return the hydraulic oil discharged from the one-side supply-discharge port 12a of the second hydraulic motor 12 to the first pipe 14. This supply-discharge pipe 18a is included in the concept of "second introducing pipe" in accordance with the present invention. One end of the supply-discharge pipe 18a is connected to the first pipe 14, and the other end of the supply-discharge pipe 18a is connected to the one-side supply-discharge port 12a of the second hydraulic motor 12.

The other supply-discharge pipe 18b, from among the supply-discharge pipes 18a, 18b, serves to introduce the hydraulic oil discharged from the hydraulic pump 8 into the second pipe 16 into the other-side supply-discharge port 12b of the second hydraulic motor 12 and return the hydraulic oil discharged from the other-side supply-discharge port 12b of the second hydraulic motor 12 to the second pipe 16. One end of the other supply-discharge pipe 18b is connected to the second pipe 16, and the other end of the other supply-discharge pipe 18b is connected to the other-side supply-discharge port 12b of the second hydraulic motor 12.

With such a configuration of pipes, the hydraulic oil can circulate between the hydraulic pump 8 and both hydraulic motors 10, 12. More specifically, when the hydraulic oil is discharged from the one-side supply-discharge port 8a of the hydraulic pump 8, this hydraulic oil is distributed in equal amounts to the supply-discharge pipe 17a and the supply-discharge pipe 18a via the first pipe 14. The hydraulic oil flowing in the supply-discharge pipe 17a is introduced into the one-side supply-discharge port 10a of the first hydraulic motor 10, and the hydraulic oil flowing in the supply-discharge pipe 18a is introduced into the one-side supply-discharge port 12a of the second hydraulic motor 12. The hydraulic oil discharged from the other-side supply-discharge port 10b of the first hydraulic motor 10 flows into the second pipe 16 via the supply-discharge pipe 17b, and the hydraulic oil discharged from the other-side supply-discharge port 12b of the second hydraulic motor 12 flows into the second pipe 16 via the supply-discharge pipe 18b. The hydraulic oil that has flown in the second pipe 16 returns to the other-side supply-discharge port 8b of the hydraulic pump 8. When the hydraulic oil is discharged from the other-side supply-discharge port 8b of the hydraulic pump 8, the hydraulic oil flows in the path reversed with respect to the above-described one.

The first pressure sensor 20a is connected to the first pipe 14, and the second pressure sensor 20b is connected to the second pipe 16. The first pressure sensor 20a detects a pressure of the hydraulic oil flowing in the first pipe 14, and the second pressure sensor 20b detects a pressure of the hydraulic oil flowing in the second pipe 16. These pressure sensors 20a, 20b send signals indicating the respective detection pressure to the control unit 34.

The connection pipe 22 connects the first pipe 14 and the second pipe 16 to each other. The connection pipe 22 is provided with the first check valve 23 and the second check valve 24. A pipe is provided that connects a portion of the connection pipe 22 located between the first check valve 23 and the second check valve 24 to the first pipe 14 in order to bypass the first check valve 23, and the first relief valve 25 is provided in this pipe. Further, a pipe is provided that connects a portion of the connection pipe 22 located between the first check valve 23 and the second check valve 24 to the second pipe 16 in order to bypass the second check valve 24, and the second relief valve 26 is provided in this pipe. The portion of the connection pipe 22 that is located between the first check valve 23 and the second check valve 24 is connected to a hydraulic oil tank T via the discharge pipe 27. With such a configuration, where a hydraulic pressure inside the first pipe 14 becomes higher than a set pressure of the first relief valve 25, the hydraulic oil escapes from the first pipe 14 into the hydraulic oil tank T via the first relief valve 25 and the discharge pipe 27. Where a hydraulic pressure inside the second pipe 16 becomes higher than a set pressure of the second relief valve 26, the hydraulic oil escapes from the second pipe 16 into the hydraulic oil tank T via the second relief valve 26 and the discharge pipe 27. Therefore, the hydraulic pressure inside the first pipe 14 is maintained at a level equal to or less than the set pressure of the first relief valve 25, and the hydraulic pressure inside the second pipe 16 is maintained at a level equal to or less than the set pressure of the second relief valve 26.

The combining mechanism 28 can combine the drive power generated by the first hydraulic motor 10 with the drive power generated by the second hydraulic motor 12. The combining mechanism 28 is switched between a state in which the combining mechanism 28 combines the drive power generated by the first hydraulic motor 10 and the drive power generated by the second hydraulic motor 12 and a state in which the combining mechanism 28 does not combine the drive power generated by the first hydraulic motor 10 and the drive power generated by the second hydraulic motor 12. The combining mechanism 28 includes a first rotating shaft 42, a second rotating shaft 44, and a clutch 46.

The first rotating shaft 42 is rotated by the drive power generated by the first hydraulic motor 10. More specifically, the first rotating shaft 42 is coaxially connected to an output shaft of the first hydraulic motor 10 and rotates together with the output shaft of the first hydraulic motor 10, following the drive of the first hydraulic motor 10. The first rotating shaft 42 is connected to the transmission mechanism 30.

The second rotating shaft 44 is rotated by the drive power generated by the second hydraulic motor 12. More specifically, the second rotating shaft 44 is coaxially connected to an output shaft of the second hydraulic motor 12 and rotates together with the output shaft of the second hydraulic motor 12, following the drive of the second hydraulic motor 12. Further, the second rotating shaft 44 is disposed coaxially with the first rotating shaft 42 and rotated in the same rotation direction as that of the first rotating shaft 42 by the drive power of the second hydraulic motor 12.

The clutch 46 is provided between the first rotating shaft 42 and the second rotating shaft 44. The clutch 46 is included in the concept of "first clutch" in accordance with the present invention. The clutch 46 is automatically switched between an engaged state in which the clutch engages the first rotating shaft 42 and the second rotating shaft 44 and a disengaged state in which the clutch disengages the first rotating shaft 42 and the second rotating shaft 44 according to the rotation direction and rotation speed of the first rotating shaft 42 and the second rotating shaft 44. When the clutch 46 is in the engaged state, the combining mechanism 28 is in a state of combining the drive powers of the two hydraulic motors 10, 12, and when the clutch 46 is in the disengaged state, the combining mechanism 28 does not combine the drive powers of the two hydraulic motors 10, 12. The clutch 46 is the so-called one-way clutch, and a variety of well-known one-way clutches can be used as the clutch 46.

For example, when the clutch 46 is a sprag-type one-way clutch (see, for example, Japanese Patent Application Laid-open No. H5-26264), the clutch 46 includes a first engagement portion 47, a second engagement portion 48, and a plurality of sprags (not shown in the figure) serving as support members for supporting the second engagement portion 48 with respect to the first engagement portion 47.

The first engagement portion 47 is joined to the first rotating shaft 42 so as to rotate integrally with the first rotating shaft 42. The second engagement portion 48 is joined to the second rotating shaft 44 so as to rotate integrally with the second rotating shaft 44. These first engagement portion 47 and the second engagement portion 48 can be rotated in a direction causing the hydraulic traveling vehicle to move forward when the rotation power of the engagement portions is transmitted to the wheels 2 and also in the direction opposite to this rotation direction and such that the hydraulic traveling vehicle moves rearward when the rotation power of the engagement portions is transmitted to the wheels 2.

When the rotation speed of the second engagement portion 48 in the rotation direction causing the hydraulic traveling vehicle to move forward rises and reaches a rotation speed equal to the rotation speed of the first engagement portion 47 in the same rotation direction, the clutch 46 automatically assumes the engaged state. As a result, the first engagement portion 47 rotates integrally with the second engagement portion 48. When the rotation speed of the second engagement portion 48 in the direction causing the hydraulic traveling vehicle to move forward decreases below the rotation speed of the first engagement portion 47 in the same rotation direction, the clutch 46 automatically assumes the disengaged state. As a result, the first engagement portion 47 idles with respect to the second engagement portion 48. Further, when the rotation speed of the first engagement portion 47 in the rotation direction causing the hydraulic traveling vehicle to move rearward increases and reaches the rotation speed equal to the rotation speed of the second engagement portion 48 in the same rotation direction, the clutch 46 automatically assumes the engaged state. As a result, the second engagement portion 48 rotates integrally with the first engagement portion 47. When the rotation speed of the first engagement portion 47 in the rotation direction causing the hydraulic traveling vehicle to move rearward decreases below the rotation speed of the second engagement portion 48 in the same rotation direction, the clutch 46 automatically assumes the disengaged state. As a result, the second engagement portion 48 idles with respect to the first engagement portion 47.

The first engagement portion 47 has an outer ring portion (not shown in the figure) disposed coaxially with the first rotating shaft 42. The second engagement portion 48 has an inner ring portion (not shown in the figure) disposed coaxially with the second rotating shaft 44. The inner ring portion is provided to be coaxial with the outer ring portion on the inside of the outer ring portion of the first engagement portion 47. A plurality of sprags are provided between the outer ring portion of the first engagement portion 47 and the inner ring portion of the second engagement portion 48 and arranged in the circumferential direction of the outer ring portion and the inner ring portion. These sprags can function as props supporting the inner ring portion with respect to the outer ring portion between the outer ring portion and the inner ring portion.

When the rotation speed of the second engagement portion 48 in the rotation direction causing the hydraulic traveling vehicle to move forward rises and reaches a rotation speed equal to the rotation speed of the first engagement portion 47 in the same rotation direction, the sprags assume a state of connecting the first engagement portion 47 with the second engagement portion 48 such that prevents the second engagement portion 48 from rotating relative to the first engagement portion 47. As a result, the engagement portions 47, 48 can be rotated integrally. When the rotation speed of the second engagement portion 48 in the rotation direction causing the hydraulic traveling vehicle to move forward is below the rotation speed of the first engagement portion 47 in the same rotation direction, the sprags assume a state in which the second engagement portion 48 is allowed to rotate with respect to the first engagement portion 47.

More specifically, when the rotation speed of the second engagement portion 48 in the rotation direction causing the hydraulic traveling vehicle to move forward rises and reaches a rotation speed equal to the rotation speed of the first engagement portion 47 in the same rotation direction, in other words, when the inner ring portion of the second engagement portion 48 rotates in the same direction relative to the outer ring portion of the first engagement portion 47 rotating in the rotation direction causing the vehicle to move forward and the rotation speed of the inner ring portion starts exceeding the rotation speed of the outer ring portion of the first engagement portion 47, the outer ring portion of the first engagement portion 47 and the inner ring portion of the second engagement portion 48 mesh with the sprags. As a result, the first engagement portion 47 and the second engagement portion 48 rotate integrally. When the rotation speed of the second engagement portion 48 in the rotation direction causing the hydraulic traveling vehicle to move forward is below the rotation speed of the first engagement portion 47 in the same rotation direction, in other words, when the inner ring portion of the second engagement portion 48 rotates in the opposite direction with respect to the outer ring portion of the first engagement portion 47 rotating in the rotation direction causing the vehicle to move forward, both the first engagement portion 47 and the second engagement portion 48 idle with respect to the sprags. As a result, the first engagement portion 47 idles with respect to the second engagement portion 48.

Further, when the rotation speed of the second engagement portion 48 in the rotation direction causing the hydraulic traveling vehicle to move rearward rises and reaches a rotation speed equal to the rotation speed of the first engagement portion 47 in the same rotation direction, the sprags assume a state of connecting the first engagement portion 47 with the second engagement portion 48 so as to prevent the second engagement portion 48 from rotating relative to the first engagement portion 47. As a result, the engagement portions 47, 48 are rotated integrally. When the rotation speed of the second engagement portion 48 in the rotation direction causing the hydraulic traveling vehicle to move rearward is below the rotation speed of the engagement portion 47 in the same rotation direction, the sprags assume a state in which the second engagement portion 48 is allowed to rotate relative to the first engagement portion 47.

More specifically, when the rotation speed of the first engagement portion 47 in the rotation direction causing the hydraulic traveling vehicle to move rearward (rotation direction opposite to the rotation direction causing the vehicle to move forward) rises and reaches the rotation speed equal to the rotation speed of the second engagement portion 48 in the same rotation direction, that is, when the outer ring portion of the first engagement portion 47 rotates in the same rotation direction relative to the inner ring portion of the second engagement portion 48 that rotates in the rotation direction causing the vehicle to move rearward and the rotation speed of the outer ring portion starts exceeding the rotation speed of the inner ring portion of the second engagement portion 48, the outer ring portion of the first engagement portion 47 and the inner ring portion of the second engagement portion 48 mesh with the sprags. As a result, the first engagement portion 47 and the second engagement portion 48 rotate integrally. When the rotation speed of the first engagement portion 47 in the rotation direction causing the hydraulic traveling vehicle to move rearward is below the rotation speed of the second engagement portion 48 in the same rotation direction, that is, when the outer ring portion of the first engagement portion 47 rotates in the opposite direction relative to the inner ring portion of the second engagement portion 48 rotating in the rotation direction causing the vehicle to move rearward, both the first engagement portion 47 and the second engagement portion 48 idle with respect to the sprags. As a result, the first engagement portion 47 idles with respect to the second engagement portion 48.

In addition to the above-described sprag-type one-way clutch, for example, a well-known roller-type one-way clutch (see Japanese Patent Application Laid-open No. H8-338450) or other one-way clutches may be used as the clutch 46.

The transmission mechanism 30 transmits the drive power obtained from the combining mechanism 28 to the wheel shaft 4 and thereby rotates the wheel shaft 4 and the wheels 2. The transmission mechanism 30 is connected to the first rotating shaft 42 of the combining mechanism 28 and transmits the drive power from the first rotating shaft 42 to the wheel shaft 4. The transmission mechanism 30 includes a first gear 49, a second gear 50, a transmission shaft 51, and a conversion unit (not shown in the figure).

The first gear 49 is externally fitted onto the first rotating shaft 42 and fixed thereto in a state of being disposed coaxially with the first rotating shaft 42. The first gear 49 is an external gear and rotates together with the first rotating shaft 42.

The second gear 50 meshes with the first gear 49. Further, the second gear 50 is joined to one end portion of the transmission shaft 51 in a state of being disposed coaxially with the transmission shaft 51. The second gear 50 receives rotation of the first gear 49 and thereby rotates together with the transmission shaft 51.

The transmission shaft 51 extends in the longitudinal direction of the vehicle. The second gear 50 is joined to one axial end portion of the transmission shaft 51. The transmission shaft 51 transmits from the second gear 50 to the wheel shaft 4 the rotation power transmitted from the first gear 49 to the second gear 50. The transmission shaft 51 is supported by bearings (not shown in the figure) so that the transmission shaft 51 can rotate about the axis thereof.

The conversion unit (not shown in the figure) is connected to the end portion of the transmission shaft 51 on the side opposite that of the end portion joined to the second gear 50. The conversion unit is also connected to the wheel shaft 4. The conversion unit converts the rotation power of the transmission shaft 51 about the axis thereof into the rotation power about a horizontal axis extending in the transverse direction of the vehicle and applies the converted rotation power to the wheel shaft 4.

The forward-rearward switching device 32 is configured to be capable of switching between a forward designation state that designates the forward movement of the vehicle and a rearward designation state that designates the rearward movement of the vehicle and, depending on whether the state is the forward designation state or the rearward designation state, outputs to the control unit 34 a signal corresponding to the state thereof.

More specifically, as shown in FIG. 1, the forward-rearward switching device 32 has a main body portion 32a and a forward-rearward switching portion 32b. The forward-rearward switching portion 32b is composed of an operation lever operated by the operator and attached to the main body portion 32a so as to enable switching between a forward position for designating forward movement of the vehicle and a rearward position for designating rearward movement of the vehicle. More specifically, the forward-rearward switching portion 32b is attached to the main body portion 32a so that the forward-rearward switching portion can tumble to one side with respect to a neutral position and to the other side that is on the opposite side of the neutral position, thereby assuming a forward position by tumbling to one side from the neutral position and assuming a rearward position by tumbling to the other side from the neutral position. A state in which the forward-rearward switching portion 32b is switched to the forward position corresponds to the forward designation state of the forward-rearward switching device 32, and a state in which the forward-rearward switching portion 32b is switched to the rearward position corresponds to the rearward designation position of the forward-rearward switching device 32. The main body portion 32a outputs to the control device 34 a first signal that notifies the control device of the forward-rearward switching portion 32b being switched to the forward position when such switching occurs and also outputs to the control device 34 a second signal that notifies the control device of the forward-rearward switching portion 32b being switched to the rearward position when such switching occurs.

The control device 34 controls a capacity of the hydraulic pump 8, a capacity of the first hydraulic motor 10, and a capacity of the second hydraulic motor 12. The control device 34 controls the capacities of the hydraulic pump 8, the first hydraulic motor 10, and the second hydraulic motor 12 on the basis of signals indicating the detection pressure that are sent from the pressure sensors 20a, 20b. Further, the control device 34 switches the discharge direction of the hydraulic oil of the hydraulic pump 8 in response to a signal sent from the forward-rearward switching device 32. More specifically, when a first signal is sent from the forward-rearward switching device 32, the control device 34 causes the hydraulic pump 8 to discharge the hydraulic oil from the one discharge port 8a, and when the second signal is sent from the forward-rearward switching device 32, the control device 34 causes the hydraulic pump 8 to discharge the hydraulic oil from the other discharge port 8b.

The operation of the hydraulic traveling vehicle according to the first embodiment will be described below.

In the hydraulic traveling vehicle, the hydraulic pump 8 is actuated following the drive of the engine 6. In this case, when the forward-rearward switching portion 32b is tumbled to the forward position side by the operator, the hydraulic oil is discharged from the one-side supply-discharge port 8a of the hydraulic pump 8 into the first pipe 14.

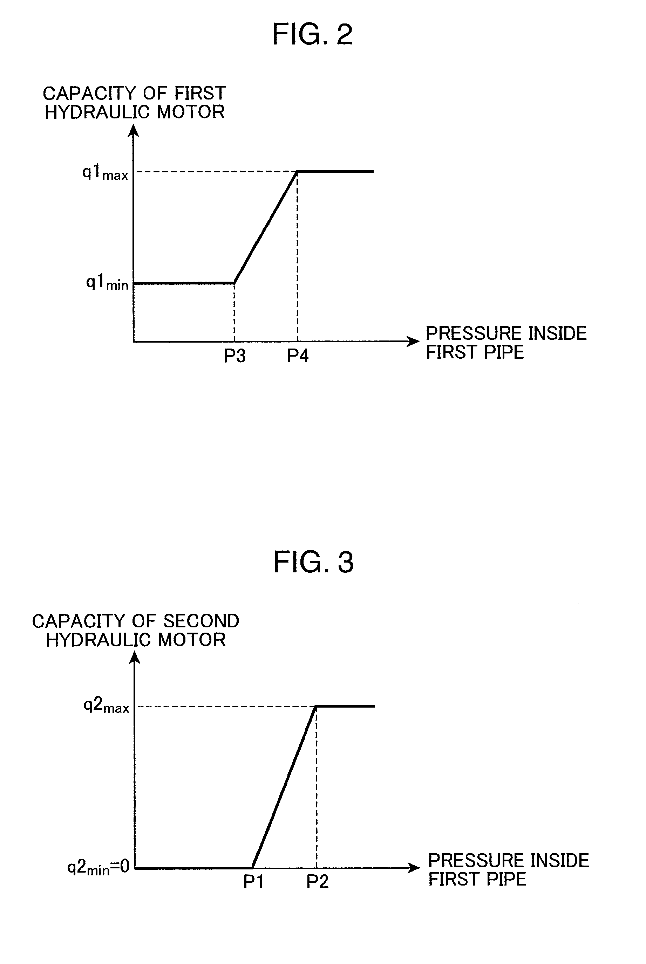

In this case, the control unit 34 controls the capacity of the first hydraulic motor 10 according to the relationship such as shown in FIG. 2 and controls the capacity of the second hydraulic motor 12 according to the relationship such as shown in FIG. 3 on the basis of pressure inside the first pipe 14 detected by the first pressure sensor 20a.

In the capacity control of both hydraulic motors 10, 12 on the basis of the relationships shown in FIG. 2 and FIG. 3, when the vehicle starts accelerating, the pressure inside the first pipe 14 rises, as will be described below, and the control device 34 accordingly sets the capacity of the first hydraulic motor 10 to a maximum capacity $q1_{max}$ and sets a capacity of the second hydraulic motor 12 to a maximum capacity $q2_{max}$. Where the speed of the vehicle increases, the pressure inside the first pipe 14 decreases and the control unit 34 accordingly reduces the capacity of the two hydraulic motors 10, 12.

Where a sum total of capacities of the two hydraulic motors 10, 12 is denoted by q, a discharged amount of hydraulic pump 8 is denoted by Qp, and a capacity efficiency is denoted by $\eta_v$, a rotation speed $\omega$ of the hydraulic motors 10, 12 can be represented by the following Eq. (1).

$$\omega = \eta_v \cdot Q_p / q \qquad\qquad (1)$$

Eq. (1) demonstrates that where the sum total q of capacities of the two hydraulic motors 10, 12 decreases, the rotation speed $\omega$ of the hydraulic motors 10, 12 increases. Therefore, the capacity control of the hydraulic motors 10, 12 based on the relationships shown in FIG. 2 and FIG. 3 makes it possible to increase the rotation speed of the hydraulic motors 10, 12 and accordingly run the vehicle at a high speed.

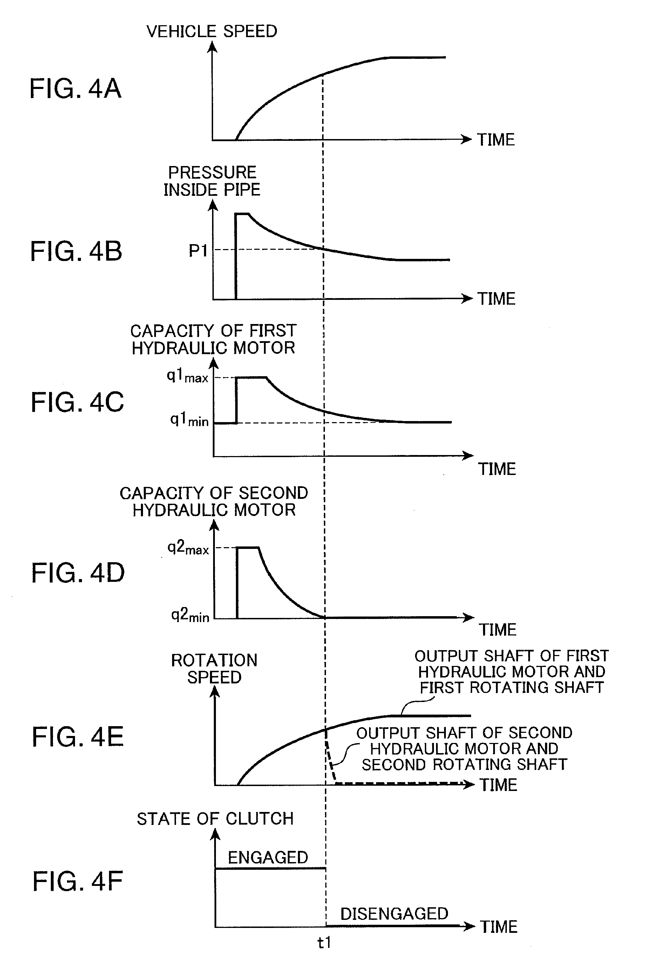

More specifically, when acceleration of the vehicle is started from a state in which the vehicle has been stopped (see FIG. 4A), since the inertia force maintaining the vehicle in a stopped state acts upon the vehicle, the rotation speed for the first hydraulic motor 10 and the second hydraulic motor 12 is difficult to increase. Therefore, the flow rate of the hydraulic oil that can flow into the two hydraulic motors 10, 12 decreases with respect to the discharge amount of the hydraulic oil discharged from the hydraulic pump 8. As a result, as shown in FIG. 4B, the pressure inside the first pipe 14 rises abruptly. Further, since the pressure inside the first pipe 14 rises, the control unit 34 sets the capacity of the first hydraulic motor 10 to the maximum capacity $q1_{max}$ (see FIG. 2), as shown in FIG. 4C, and sets the capacity of the second hydraulic motor 12 to the maximum capacity $q2_{max}$ (see FIG. 3), as shown in FIG. 4D. As a result, a large torque is obtained from the two hydraulic motors 10, 12.

In this case, the clutch 46 assumes the engaged state (see FIG. 4F), and the first rotating shaft 42 and the second rotating shaft 44 rotate integrally. As a result, the drive powers of the two hydraulic motors 10, 12 are combined. The combined drive power is transmitted to the wheel shaft 4 via the transmission mechanism 30. As a result, the wheels 2 are driven by a high torque when the vehicle accelerates.

Where the vehicle speed then increases and the rotation speed of the hydraulic motors 10, 12 rises as shown in FIG. 4E, the flow rate of the hydraulic oil that can flow into the two hydraulic motors 10, 12 increases. As a result, the pressure inside the first pipe 14 gradually decreases as shown in FIG. 4B. When the pressure inside the first pipe 14 decreases below a pressure P2 (see FIG. 3), the control unit 34 gradually decreases the capacity of the second hydraulic motor 12. When the pressure inside the first pipe 14 further decreases below a pressure P4 (see FIG. 2), the control unit 34 gradually decreases the capacity of the first hydraulic motor 10. The pressure P2 is set to a value slightly larger than the pressure P4.

At a point in time t1 at which the pressure inside the first pipe 14 decreases to a pressure P1 (see FIG. 4B), the control device 34 decreases the capacity of the second hydraulic motor 12 to a minimum capacity $q2_{min} = 0$, as shown in FIG. 4D. As a result, the second hydraulic motor 12 stops generating the drive power. The second hydraulic motor 12 then rotates by inertia, and the rotation speed of the second hydraulic motor 12 decreases due to the revolution resistance thereof. As a result, the rotation speed (rotation speed) of the second hydraulic motor 12 and the second rotating shaft 44 decreases rapidly to zero, as shown in FIG. 4E. The rotation speed of the second engagement portion 48 of the clutch 46 accordingly decreases below the rotation speed of the first engagement portion 47 that rotates together with the output shaft of the first hydraulic motor 10 and the first rotating shaft 42. As a result, the first engagement portion 47 and the second engagement portion 48 become mutually idle and the clutch 46 is switched from the engaged state to the disengaged state (see FIG. 4F). Therefore, the drive power of the second hydraulic motor 12 is not added to the drive power of the first hydraulic motor 10 in the combining mechanism 28, and only the drive power of the first hydraulic motor 10 is transmitted to the wheel shaft 4 via the transmission mechanism 30. Thus, the wheels 2 are thereafter driven only by the drive power of the first hydraulic motor 10.

Where the pressure inside the first pipe 14 then decreases to the pressure P3 (see FIG. 2), the control device 34 decreases the capacity of the first hydraulic motor 10 to the minimum capacity $q1_{min}$. Where the pressure inside the first pipe 14 thereafter becomes equal to or less than the pressure P3, the control device 34 maintains the capacity of the first hydraulic motor 10 at the minimum capacity $q1_{min}$. Then, the rotation speed of the first hydraulic motor 10 and the rotation speed of the first rotating shaft 42 become constant. The vehicle speed thus assumes a constant value.

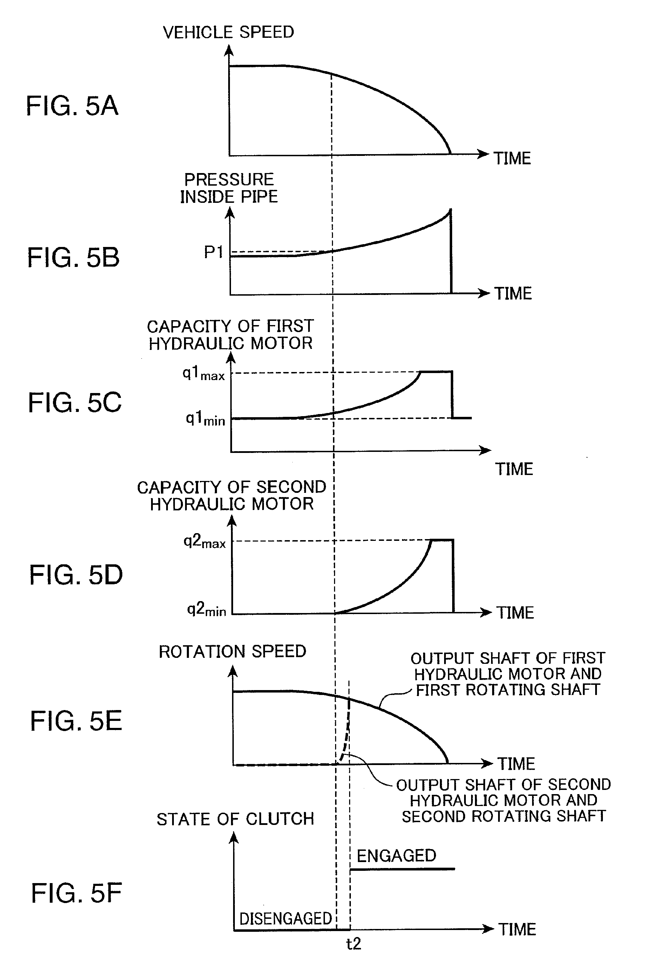

Where the vehicle decelerates from a state of running at a constant speed (see FIG. 5A), the rotation speed of the wheels 2 and the wheel shaft 4 decreases and the rotation speed of the first rotating shaft 42 and the first hydraulic motor 10 decreases accordingly (see FIG. 5E).

In this case, the flow rate of the hydraulic oil that can flow into the first hydraulic motor 10 decreases and the pressure inside the first pipe 14 gradually increases following this decrease in flow rate (see FIG. 5B). Where the pressure inside the first pipe 14 exceeds the pressure P3 (see FIG. 2), the control unit 34 gradually increases the capacity of the first hydraulic motor 10 (see FIG. 5C). Where the pressure inside the first pipe 14 further increases above the pressure P1 (see FIG. 3), the control device 34 gradually increases the capacity of the second hydraulic motor 12 (see FIG. 5D). Since the capacity of the second hydraulic motor 12 increases, the second hydraulic motor 12 starts rotating and the rotation speed of the output shaft of the second hydraulic motor 12 and the second rotating shaft 44 rapidly increases as shown in FIG. 5E. As a result, the rotation speed of the second engagement portion 48 of the clutch 46 also rapidly increases. Where the rotation speed of the second engagement portion 48 reaches the rotation speed equal to the rotation speed of the first engagement portion 47, the first engagement portion 47 and the second engagement portion 48 rotate integrally, and the clutch 46 is switched from the disengaged state to the engaged state (see FIG. 5F).

Where the pressure in the first pipe 14 then rises to pressure P4 (see FIG. 2), the control device 34 increases the capacity of the first hydraulic motor 10 to the maximum capacity $q1_{max}$ and maintains the capacity. Where the pressure in the first pipe 14 further rises to pressure P2 (see FIG. 3), the control device 34 increases the capacity of the second hydraulic motor 12 to the maximum capacity $q2_{max}$ and maintains the capacity. Where the vehicle then stops traveling and the vehicle speed becomes zero, the drive of the hydraulic pump 8 is stopped. As a result, no hydraulic oil is discharged from the hydraulic pump 8 and therefore the pressure inside the first pipe 14 drops to zero. As the pressure inside the first pipe 14 decreases, the control device 34 decreases the capacity of the first hydraulic motor 10 to the minimum capacity $q1_{min}$ and decreases the capacity of the second hydraulic motor 10 to the minimum capacity $q2_{min} = 0$.

As described hereinabove, in the first embodiment, when the capacity control is performed to increase the capacity of the second hydraulic motor 12 from zero in a state in which the first hydraulic motor 10 operates and the first rotating shaft 42 and the first engagement portion 47 of the clutch 46 rotate at a predetermined rotation speed when the vehicle decelerates and in a state in which the first engagement portion 47 idles with respect to the second engagement portion 48, if the rotation speed of the second hydraulic motor 12 rises and the rotation speed of the second rotating shaft 44 and the second engagement portion 48 reaches a rotation speed equal to the rotation speed of the first engagement portion 47, the clutch 46 assumes the engaged state and therefore the first engagement portion 47 and the second engagement portion 48 rotate integrally. Since the rotation speed of the first engagement portion 47 is equal to the rotation speed of the second engagement portion 48 when the clutch 46 is in the engaged state, occurrence of shocks during coupling of the clutch 46 that are caused by the difference in rotation speed between the engagement portions 47 and 48 is inhibited and the clutch 46 is prevented from damage.

Further, in the first embodiment, when the capacity control is performed to decrease the capacity of the second hydraulic motor 12 to zero in a state in which the first hydraulic motor 10 and the second hydraulic motor 12 operate and the first engagement portion 47 and the second engagement portion 48 of the clutch 46 rotate integrally as the vehicle accelerates, if the rotation speed of the second hydraulic motor 12 decreases and the rotation speed of the second rotating shaft 44 and the second engagement portion 48 decreases below the rotation speed of the first engagement portion 47, the clutch 46 assumes a disengaged state and therefore the first engagement portion 47 idles with respect to the second engagement portion 48. When the clutch 46 is in the disengaged state, since the capacity of the second hydraulic motor 12 has already decreased, the second hydraulic motor 12 is prevented from over-rotating. As a result, breakage of the second hydraulic motor 12 caused by over-rotation of the second hydraulic motor 12 can be prevented. Therefore, in the first embodiment, it is possible to prevent breakage of the second hydraulic motor 12, occurrence of shocks, and damage of the clutch 46 caused by engagement and disengagement of the clutch 46 in a hydraulic traveling vehicle that is driven by drive power of a plurality of hydraulic motors 10, 12.

In the first embodiment, the clutch 46 is engaged and disengaged by using a relative rotation speed difference between the first engagement portion 47 and the second engagement portion 48. Therefore, by contrast with the conventional configuration in which a clutch is engaged and disengaged by inputting control signals to the clutch from the outside, a lag from the instant at which the rising rotation speed of the second hydraulic motor 12 and second rotating shaft 44 reaches a rotation speed equal to the rotation speed of the first hydraulic motor 10 and first rotating shaft 42 to the instant at which the clutch 46 actually assumes the engaged state and a lag from the instant at which the rotation speed of the second hydraulic motor 12 and second rotating shaft 44 decreases below the rotation speed of the first hydraulic motor 10 and first rotating shaft 42 to the instant at which the clutch 46 actually assumes the disengaged state are extremely small. As a result, breakage of the second hydraulic motor 12, occurrence of shocks, and damage of the clutch 46 caused by such lags can be reliably prevented.

Further, in the first embodiment, since the supply-discharge pipes 17a, 18a are both connected to the first pipe 14 connected on the one-side supply-discharge port 8a of the hydraulic pump 8, the hydraulic oil discharged from the hydraulic pump 8 into the first pipe 14 when the vehicle moves forward is naturally distributed in equal amounts to the supply-discharge pipe 17a connected to the first hydraulic motor 10 and the supply-discharge pipe 18a connected to the second hydraulic motor 12. As a result, the rotation speed of the first hydraulic motor 10 is easily synchronized with the rotation speed of the second hydraulic motor 12.

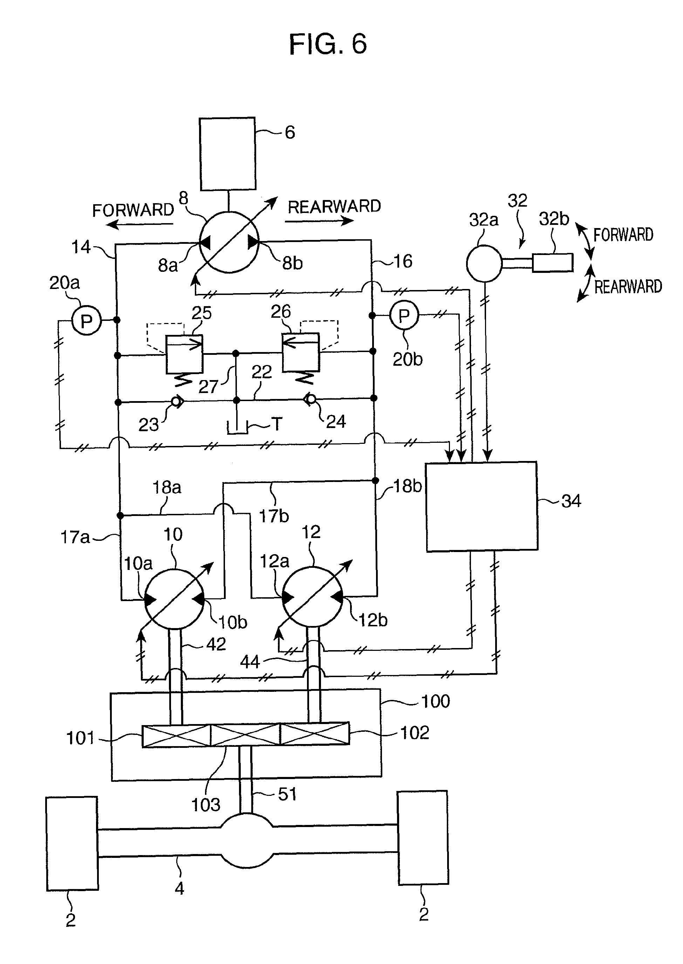

A configuration such as that of a comparative example shown in FIG. 6 can be also considered as a configuration of a hydraulic traveling vehicle in which drive power of the first hydraulic motor 10 and drive power of the second hydraulic motor 12 are combined and the combined power is transmitted to the wheel shaft 4. More specifically, in the comparative example, the first rotating shaft 42 connected to the first hydraulic motor 10 and the second rotating shaft 44 connected to the second hydraulic motor 12 are separated in the transverse direction of the vehicle and disposed parallel to each other. Further, in the vehicle of this comparative example, a gear box 100 is provided for combining drive power of the first hydraulic motor 10 to be transmitted to the first rotating shaft 42 and drive power of the second hydraulic motor 12 to be transmitted to the second rotating shaft 44 and transmitting the combined drive power to the transmission shaft 51. The gear box 100 has a first transmission gear 101, a second transmission gear 102, and a combining gear 103.

The first transmission gear 101 is disposed coaxially with the first rotating shaft 42, joined to the first rotating shaft 42, and rotates integrally with the first rotating shaft 42. The second transmission gear 102 is disposed coaxially with the second rotating shaft 44, joined to the second rotating shaft 44, and rotates integrally with the second rotating shaft 44. The combining gear 103 is provided between the first transmission gear 101 and the second transmission gear 102 and meshes with these two transmission gears 101, 102. The combining gear 103 is disposed coaxially with the transmission shaft 51 and joined to the transmission shaft 51.

Because of such configuration, in the hydraulic traveling vehicle of the comparative example, drive power of the first hydraulic motor 10 is transmitted from the first transmission gear 101 to the combining gear 103, and drive power of the second hydraulic motor 12 is transmitted from the second transmission gear 102 to the combining gear 103. As a result, drive power of the hydraulic motor 10 is combined with drive power of the hydraulic motor 12, and the combined drive power is transmitted from the combining gear 103 to the wheel shaft 4 via the transmission shaft 51. In the comparative example, the capacity control of the hydraulic motors 10, 12 is conducted in the same manner as in the first embodiment. Thus, the capacity control of the first hydraulic motor 10 is conducted according to the relationship shown in FIG. 2, and the capacity control of the second hydraulic motor 12 is conducted according to the relationship shown in FIG. 3.

However, in the comparative example, where the vehicle speed rises and the capacity of the second hydraulic motor 12 becomes zero, the second hydraulic motor 12 does not output dive power and the second hydraulic motor 12 becomes a load for the first hydraulic motor 10.

More specifically, the first hydraulic motor 10 and the second hydraulic motor 12 are connected to each other by the first rotating shaft 42, the second rotating shaft 44, and the gears 101 to 103. Therefore, in a state in which the first hydraulic motor 10 operates and the second hydraulic motor 12 does not output drive power, the second hydraulic motor 12 operates by receiving drive power transmitted from the first hydraulic motor 10 via the first rotating shaft 42, the second rotating shaft 44, and the gears 101 to 103. As a result, rotation resistance of the second hydraulic motor 12 acts as a load for the first hydraulic motor 10.

More specifically, where a rotation resistance torque of the second hydraulic motor 12 is denoted by $T_{m2}$, an input torque of the wheel shaft 4 necessary to maintain the vehicle speed is denoted by $T_a$, a speed reduction ratio in transmission of rotation from the first transmission gear 101 and the second transmission gear 102 to the combining gear 103 is denoted by $i_b$, and a mechanical efficiency of the gear box 100 is denoted by $\eta_g$, an output torque $T_{m1}$ of the first hydraulic motor 10 necessary to maintain the vehicle speed in a state in which the capacity of the second hydraulic motor 12 is made zero and no drive power is outputted from the hydraulic motor 12 can be represented by the following Eq. (2).

$$T_{m1} = (T_{m2} + T_a/i_b)/\eta_g \qquad (2)$$

As follows from this Eq. (2), in the comparative example, the necessary output torque $T_{m1}$ of the first hydraulic motor 10 includes an element of rotation resistance torque $T_{m2}$ of the second hydraulic motor 12 in addition to the element of torque $T_a/i_b$ necessary to drive the wheel shaft 4. Therefore, the necessary output torque of the first hydraulic motor 10 increases. Where the necessary output torque of the first hydraulic motor 10 increases, the power of the engine 6, which is the power source of the first hydraulic motor 10, increases. As a result, fuel consumption is degraded.

By contrast, in the first embodiment, when the capacity of the second hydraulic motor 12 is reduced to zero, the clutch 46 assumes the disengaged state and thereby the first engagement portion 47 is idle with respect to the second engagement portion 48. Therefore, the rotation resistance torque of the second hydraulic motor 12 is not transmitted to the first hydraulic motor 10. Therefore, the necessary output torque $T_{m1}$ of the first hydraulic motor 10 in the first embodiment can be represented by the following Eq. (3) .

$$T_{m1} = T_a/(i_b \cdot \eta_g) \qquad (3)$$

As follows from this Eq. (3), in the first embodiment, the necessary output torque $T_{m1}$ of the first hydraulic motor 10 is reduced by comparison with the necessary output torque $T_{m1}$ of the first hydraulic motor 10 in the comparative example by an amount attributed to the rotation resistance torque of the second hydraulic motor 12. Therefore, the power of the engine 6 can be reduced. As a result, fuel consumption can be improved.

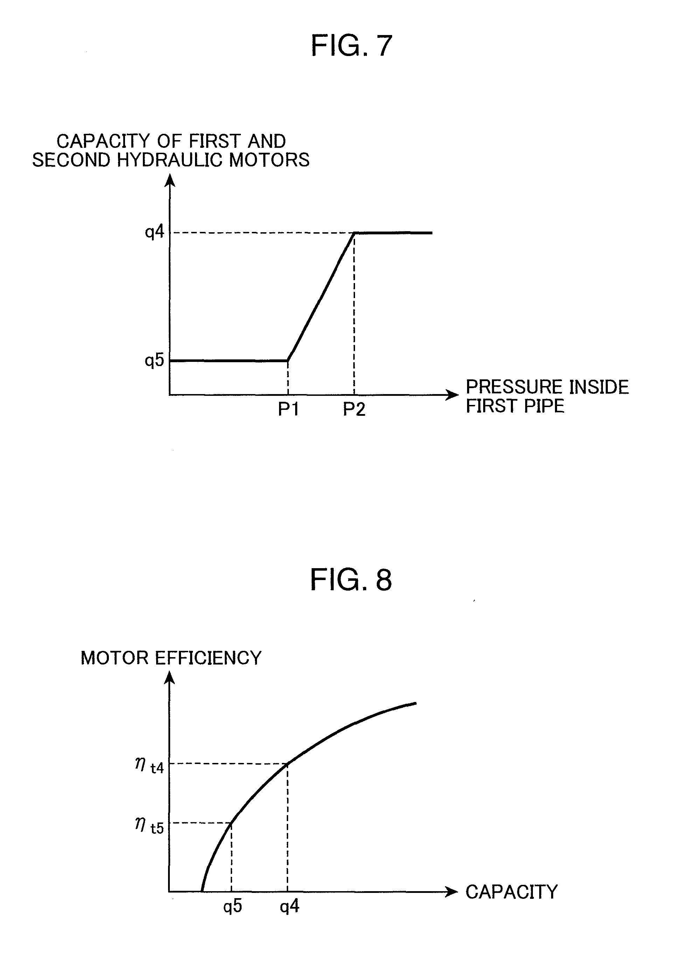

In the configuration according to the comparative example, it is also possible to control the capacity of the first hydraulic motor 10 and the capacity of the second hydraulic motor 12 with respect to the pressure inside the first pipe 14 according to the relationship shown in FIG. 7. With such control method, the capacity of the first hydraulic motor 10 and the capacity of the second hydraulic motor 12 can be controlled in the same manner. With this control method, a sum total $q_{sum}$ of the minimum capacity of the first hydraulic motor 10 and the minimum capacity of the second hydraulic motor 12 can be represented by the following Eq. (4).

$$q_{sum} = Q/\{\eta_v \cdot (i_b \times V_{max}/R)\} \qquad (4)$$

where Q stands for a discharge amount of the hydraulic pump 8, $\eta_v$ - a volume efficiency, $V_{max}$ - a maximum speed of the vehicle, and R - a diameter of the wheel 2.

Where the minimum capacity of the hydraulic motors 10, 12 in the comparative example in the case in which the capacity control of the hydraulic motors 10, 12 is performed according to the relationship shown in FIG. 7 is denoted by q5, the relationship represented by the following Eq. (5) is valid.

$$2 \times q5 = q1_{min} = q_{sum} \qquad (5)$$

Thus, the minimum capacity q5 of the hydraulic motors 10, 12 in the comparative example in the case in which the capacity control of the hydraulic motors 10, 12 is performed according to the relationship shown in FIG. 7 assumes a value that is half the minimum capacity $q1_{min}$ of the first hydraulic motor 10 in the first embodiment in which the capacity control of the hydraulic motors 10, 12 is performed according to the relationships shown in FIG. 2 and FIG. 3.

The relationship between a total efficiency $\eta_t$ of the hydraulic motors 10, 12 and the capacity of the hydraulic motors 10, 12 is shown in FIG. 8. In the comparative example in which the capacity control of both hydraulic motors 10, 12 is performed according to the relationship shown in FIG. 7, the minimum capacity q5 of the hydraulic motors 10, 12 assumes a value that is half the minimum capacity $q1_{min}$ of the first hydraulic motor 10 of the first embodiment, as described hereinabove. Therefore, the total efficiency of the hydraulic motors 10, 12 in the comparative example, becomes worse than the total efficiency of the first hydraulic motor 10 in the first embodiment, as suggested by the relationship shown in FIG. 8. As a result, in the comparative example, the efficiency of power transmission to the wheel shaft 4 decreases and accordingly larger power should be outputted from the engine 6. As a result, fuel consumption is degraded.

By contrast, in the first embodiment, the minimum capacity $q1_{min}$ of the first hydraulic motor 10 increases over the minimum capacity q5 of the hydraulic motors 10, 12 in the comparative example and thereby the total efficiency of the first hydraulic motor 10 improves over the total efficiency of the hydraulic motors 10, 12 of the comparative example. Therefore, the efficiency of power transmission to the wheel shaft 4 increases and the power outputted from the engine 6 can be decreased accordingly. As a result, fuel consumption is improved.

Second Embodiment

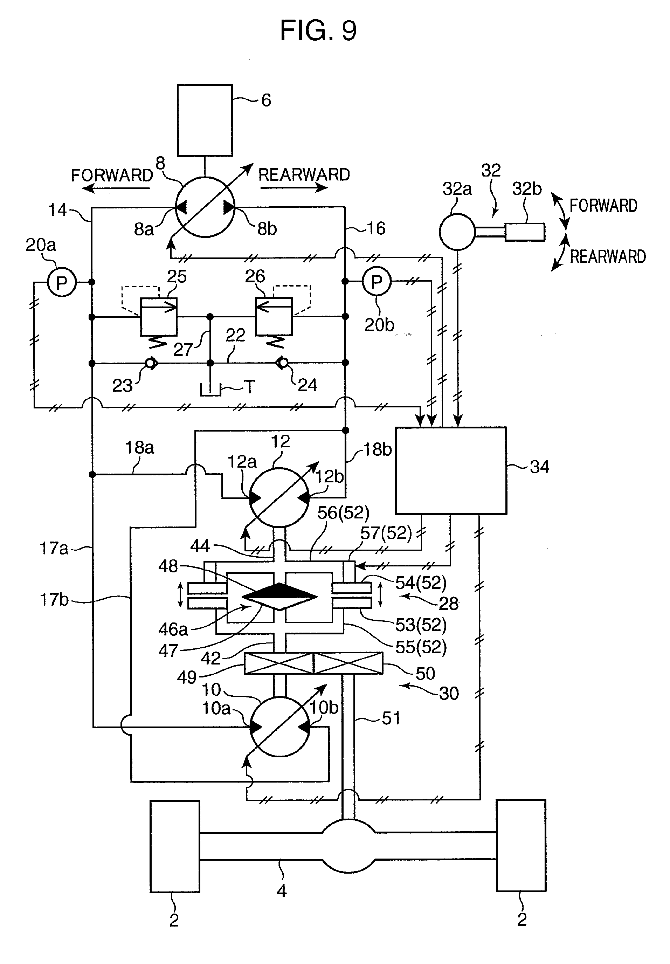

The configuration of the hydraulic traveling vehicle according to the second embodiment of the present invention will be described below with reference to FIG. 9.

In the hydraulic traveling vehicle of the second embodiment, the combining mechanism 28 includes a second clutch 52 in addition to a first clutch 46a, and when the vehicle moves rearward, drive power of the first hydraulic motor 10 and drive power of the second hydraulic motor 12 are combined via the second clutch 52.

More specifically, the first clutch 46a is configured similarly to the clutch 46 of the first embodiment.

The second clutch 52 is provided so as to surround the first clutch 46a and straddle between the first rotating shaft 42 and the second rotating shaft 44. The second clutch 52 receives an input of an instruction signal from the control device 34 and is accordingly switched between the engaged state in which the first rotating shaft 42 and the second rotating shaft 44 are connected and the disengaged state in which the first rotating shaft 42 and the second rotating shaft 44 are disconnected. When the second clutch 52 is in the engaged state, the combining mechanism 28 is in a state of combining drive powers of both hydraulic motors 10, 12, regardless of the state (engaged state or disengaged state) of the first clutch 46a. The second clutch 52 has a third engagement portion 53, a fourth engagement portion 54, a one-side support portion 55, an other-side support portion 56, and a drive unit 57.

The third engagement portion 53 and the fourth engagement portion 54 are annular clutch plates disposed on the outside of the first clutch 46a so as to surround the first clutch 46a. These third engagement portion 53 and fourth engagement portion 54 are disposed coaxially. The engagement portions 53, 54 have respective opposing surfaces that face each other in the axial direction thereof. The engagement portions 53, 54 are engaged when the mutually opposing surfaces are brought into contact with each other. As a result of the engagement, the engagement portions rotate integrally.

The one-side support portion 55 is provided at the first rotating shaft 42. This one-side support portion 55 supports the third engagement portion 53 so that the third engagement portion 53 is coaxial with the first rotating shaft 42. The other-side support portion 56 is provided at the second rotating shaft 44. The other-side support portion 56 supports the fourth engagement portion 54 so that the fourth engagement portion 54 is coaxial with the second rotating shaft 44. Further, the other-side support portion 56 supports the fourth engagement portion 54 so that the fourth engagement portion 54 can move in the axial direction thereof. As a result, the fourth engagement portion 54 can be brought into contact with and separated from the third engagement portion 53.

The drive unit 57 is provided at the other-side support portion 56. The drive unit 57 receives an input of an instruction signal from the control device 34 and moves the fourth engagement portion 54 between a contact position and a withdrawal position accordingly. The contact position is a position in which the fourth engagement portion 54 is in contact with the third engagement portion 53. The withdrawal position is a position in which the fourth engagement portion 54 is withdrawn from the third engagement portion 53.

More specifically, in the second embodiment, the control device 34 sends a disengaged state instruction signal for instructing the second clutch 52 to assume the disengaged state when the forward-rearward switching portion 32b is switched to the forward position, and sends an engaged state instruction signal for instructing the second clutch 52 to assume the engaged state when the forward-rearward switching portion 32b is switched to the rearward position. More specifically, when a first signal notifying that the forward-rearward switching portion 32b was switched to the forward position has been sent from the main body portion 32a of the forward-rearward switching device 32, the control device 34 sends the disengaged state instruction signal to the drive unit 57 of the second clutch 52, and when a second signal notifying that the forward-rearward switching portion 32b was switched to the rearward position has been sent from the main body portion 32a of the forward-rearward switching device 32, the control device 34 sends the engaged state instruction signal to the drive unit 57 of the second clutch 52.

When the disengaged state instruction signal is input to the drive unit 57, the drive unit 57 moves the fourth engagement portion 54 to the withdrawal position. As a result, the third engagement portion 53 and the fourth engagement portion 54 are disengaged from each other. When the engaged state instruction signal is input to the drive unit 57, the drive unit 57 moves the fourth engagement portion 54 to the contact position. As a result, the third engagement portion 53 and the fourth engagement portion 54 are engaged with each other.

When the forward-rearward switching portion 32b is switched to the rearward position and the vehicle moves rearward accordingly, the control device 34 causes the hydraulic pump 8 to discharge the hydraulic oil from the other-side supply-discharge port 8b into the second pipe 16. The hydraulic oil discharged into the second pipe 16 is introduced into the other-side supply-discharge port 10b of the first hydraulic motor 10 via the supply-discharge pipe 17b and also introduced into the other-side supply-discharge port 12b of the second hydraulic motor 12 via the supply-discharge pipe 18b. As a result, the first hydraulic motor 10 and the second hydraulic motor 12 rotate in the opposite direction.

When the rotation speed (rotation speed of the first rotating shaft 42 and the first engagement portion 47) of the first hydraulic motor 10 increases from a state in which the rotation speed of the first hydraulic motor 10 is lower than the rotation speed of the second hydraulic motor 12 and reaches the rotation speed equal to the rotation speed (rotation speed of the second rotating shaft 44 and the second engagement portion 48) of the second hydraulic motor 12, the first clutch 46a assumes the engaged state. In this case, the first engagement portion 47 and the second engagement portion 48 rotate integrally. When the rotation speed (rotation speed of the first rotating shaft 42 and the first engagement portion 47) of the first hydraulic motor 10 is below the rotation speed (rotation speed of the second rotating shaft 44 and the second engagement portion 48) of the second hydraulic motor 12, the first clutch 46a assumes the disengaged state. In this case, the first engagement portion 47 idles with respect to the second engagement portion 48. Therefore, when the vehicle moves rearward, drive power of the second hydraulic motor 12 cannot be effectively used in the transmission path of power via the first clutch 46a. Thus, when the rotation speed of the second hydraulic motor 12 is higher than the rotation speed of the first hydraulic motor 10, since the first clutch 46a assumes the disengaged state, the drive power of the second hydraulic motor 12 cannot be transmitted to the transmission mechanism 30 via the first clutch 46a. Therefore, when power is transmitted via the first clutch 46a, the second hydraulic motor 12 cannot be used as the main motor. However, in the second embodiment, the second clutch 52 assumes the engaged state when the vehicle moves rearward. As a result, the drive power of the second hydraulic motor 12 is transmitted to the first rotating shaft 42 via the second clutch 52 and therefore this drive power can be transmitted to the wheel shaft 4 via the transmission mechanism 30. As a result, the second hydraulic motor 12 can be used as the main motor.

Other features and operations of the hydraulic traveling vehicle according to the second embodiment are similar to those of the first embodiment.

Where the first clutch 46a is configured so that the second engagement portion 48 idles with respect to the first engagement portion 47 when the transmission mechanism 30 is connected to the first rotating shaft 42 and the rotation speed of the first engagement portion 47 of the first clutch 46a in the rotation direction causing the vehicle to move rearward is below the rotation speed of the second engagement portion 48 in the same rotation direction, as described hereinabove, when the rotation speed of the second hydraulic motor 12 is higher than the rotation speed of the first hydraulic motor 10 as the vehicle moves rearward, the drive power of the second hydraulic motor 12 cannot be transmitted to the transmission mechanism 30 via the first clutch 46a. However, in the second embodiment, since the second clutch 52 assumes the engaged state when the vehicle moves rearward, the drive power of the second hydraulic motor 12 can be transmitted from the second rotating shaft 44 to the transmission mechanism 30 via the second clutch 52 and the first rotating shaft 42. Therefore, the drive power of the second hydraulic motor 12 can be transmitted to the wheel shaft 4 when the vehicle moves rearward. As a result, the vehicle can be moved rearward by the drive power which is a combination of the drive power of the first hydraulic motor 10 and the drive power of the second hydraulic motor 12. When the vehicle moves forward, the second clutch 52 is in the disengaged state and therefore the effect similar to that of the first embodiment can be obtained by engaging and disengaging the first clutch 46a.

Third Embodiment

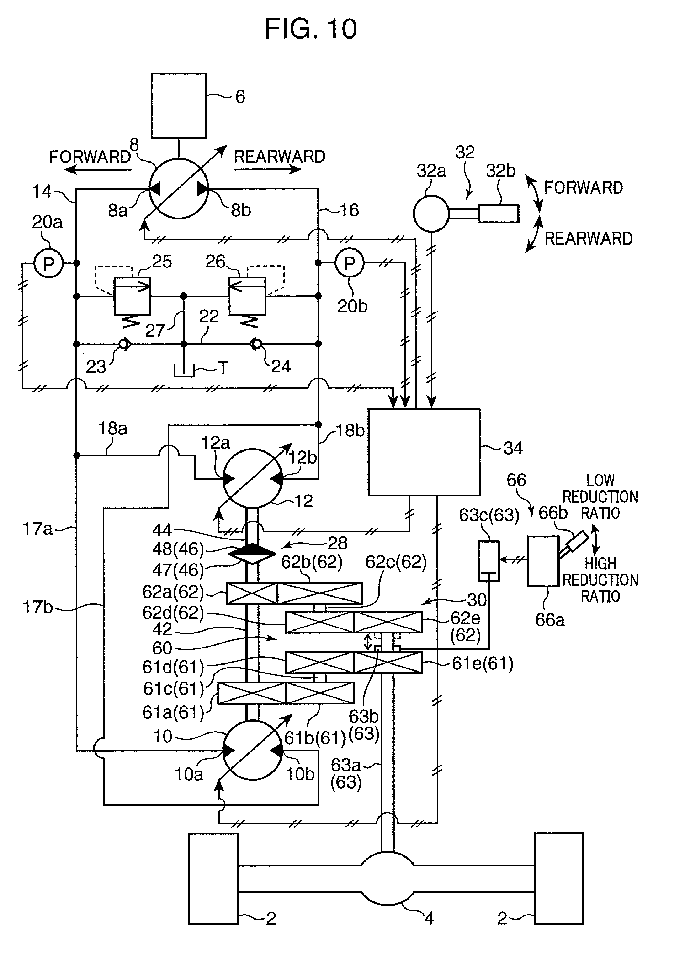

The configuration of the hydraulic traveling vehicle according to the third embodiment of the present invention will be described below with reference to FIG. 10.

In the hydraulic traveling vehicle according to the third embodiment, the transmission mechanism 30 includes a reducer 60 that reduces the drive power obtained from the combining mechanism 28 at a predetermined high reduction ratio and at a low reduction ratio that is a speed reduction ratio lower than the high reduction ratio, and the transmission mechanism 30 can transmit the drive power reduced at the high reduction ratio or low reduction ratio selected by the operator to the wheel shaft 4.

More specifically, the reducer 60 provided in the transmission mechanism 30 includes a first gear device 61 for performing speed reduction at the low reduction ratio and a second gear device 62 for performing speed reduction at the high reduction ratio.

The first gear device 61 is provided at the first rotating shaft 42. The first gear device 61 reduces the rotation speed of the first rotating shaft 42 at the low reduction ratio. The first gear device 61 has a low-reduction main drive gear 61a, a low-reduction driven gear 61b, a connection shaft 61c, a low-reduction intermediate gear 61d, and a low-reduction transmission gear 61e. The gears 61a, 61b, 61d, 61e are all external gears.

The low-reduction main drive gear 61a is externally fitted on and fixed to the first rotating shaft 42 in a state of being disposed coaxially with the first rotating shaft 42. The low-reduction main drive gear 61a rotates together with the first rotating shaft 42.

The low-reduction driven gear 61b meshes with the low-reduction main drive gear 61a and rotates by receiving a rotation force of the low-reduction main drive gear 61a. The number of teeth of the low-reduction driven gear 61b is slightly larger than the number of teeth of the low-reduction main drive gear 61a and such that makes it possible to reduce the rotation speed of the low-reduction main drive gear 61a at a desired low reduction ratio. Thus, speed reduction is performed at a low reduction ratio when rotation drive is transmitted from the low-reduction main drive gear 61a to the low-reduction driven gear 61b.

The low-reduction intermediate gear 61d is disposed coaxially with the low-reduction driven gear 61b and connected to the low-reduction driven gear 61b by the connection shaft 61c. As a result, the low-reduction driven gear 61b, connection shaft 61c, and low-reduction intermediate gear 61d rotate integrally about the same axis.

The low-reduction transmission gear 61e meshes with the low-reduction intermediate gear 61d and rotates by receiving a rotation force of the low-reduction intermediate gear 61d. The low-reduction transmission gear 61e is disposed to be coaxial with a transmission shaft 63a of the below-described transmission unit 63. The low-reduction transmission gear 61e is provided with a through hole (not shown in the figure) that passes through the low-reduction transmission gear 61e in the axial direction thereof. The below-described transmission shaft 63a is inserted into the through hole.

The second gear device 62 is provided at the first rotating shaft 42. The second gear device 62 reduces the rotation speed of the first rotating shaft 42 at the high reduction ratio. The second gear device 62 has a high-reduction main drive gear 62a, a high-reduction driven gear 62b, a connection shaft 62c, a high-reduction intermediate gear 62d, and a high-reduction transmission gear 62e. The gears 62a, 62b, 62d, 62e are all external gears.

The high-reduction main drive gear 62a is externally fitted on and fixed to the first rotating shaft 42 in a state of being disposed coaxially with the first rotating shaft 42. The high-reduction main drive gear 62a rotates together with the first rotating shaft 42.

The high-reduction driven gear 62b meshes with the high-reduction main drive gear 62a and rotates by receiving a rotation force of the high-reduction main drive gear 62a. The number of teeth of the high-reduction driven gear 62b is larger than the number of teeth of the high-reduction main drive gear 62a and such that makes it possible to reduce the rotation speed of the high-reduction main drive gear 62a at a desired high reduction ratio. Thus, speed reduction is performed at a high reduction ratio when the rotation drive is transmitted from the high-reduction main drive gear 62a to the high-reduction driven gear 62b. The ratio of the number of teeth of the high-reduction driven gear 62b to the number of teeth of the high-reduction main drive gear 62a is larger than the ratio of the number of teeth of the low-reduction driven gear 61b to the number of teeth of the low-reduction main drive gear 61a. As a result, the speed reduction ratio at which the rotation power is transmitted from the high-reduction main drive gear 62a to the high-reduction driven gear 62b is higher than the speed reduction ratio at which the rotation power is transmitted from the low-reduction main drive gear 61a to the low-reduction driven gear 61b.

The configurations of the connection shaft 62c, high-reduction intermediate gear 62d, and high-reduction transmission gear 62e are similar to the configurations of the above-described connection shaft 6 1 c, low-reduction intermediate gear 6 1 d, and low-reduction transmission gear 61e. As a result, the rotation power of the high-reduction driven gear 62b is transmitted to the transmission shaft 63 a of the below-described transmission unit 63 via the connection shaft 62c, high-reduction intermediate gear 62d, and high-reduction transmission gear 62e. The high-reduction transmission gear 62e is disposed coaxially with the transmission shaft 63a and so as to be separated from the low-reduction transmission gear 6 1 e in the axial direction thereof. The high-reduction transmission gear 62e is provided with a through hole (not shown in the figure) that passes through the high-reduction transmission gear 62e in the axial direction thereof. The below-described transmission shaft 63a is inserted into the through hole.

Further, the transmission mechanism 30 has the transmission unit 63. The transmission unit 63 is switched between a high-reduction transmission state and a low-reduction transmission state by inputting an instruction signal from the below-described reduction ratio switching device 66. The high-reduction transmission state is a state in which the drive power reduced at a high reduction ratio by the reducer 30 is transmitted to the wheel shaft 4. The low-reduction transmission state is a state in which the drive power reduced at a low reduction ratio by the reducer 30 is transmitted to the wheel shaft 4.

More specifically, the transmission unit 63 has the transmission shaft 63a, a shift fork 63b as a joining member, and a shift fork drive unit 63c.

The transmission shaft 63a serves to transmit the drive power reduced by the reducer 30 to the wheel shaft 4. As describes above, the transmission shaft 63a is inserted into the through hole of the low-reduction transmission gear 61 e and also inserted into the through hole of the high-reduction transmission gear 62e.

The shift fork 63b is provided in a portion of the transmission shaft 63a positioned between the low-reduction transmission gear 61e and the high-reduction transmission gear 62e. The shift fork 63b joins either of the low-reduction transmission gear 61e and the high-reduction transmission gear 62e to the transmission shaft 63a. By moving to the low-reduction transmission position on the low-reduction transmission gear 61e side along the transmission shaft 63a, the shift fork 63b connects the low-reduction transmission gear 61e to the transmission shaft 63a, and by moving to the high-reduction transmission position on the high-reduction transmission gear 62e side along the transmission shaft 63a, the shift fork 63b connects the high-reduction transmission gear 62e to the transmission shaft 63a.

The shift fork drive unit 63c has, for example, an air cylinder, receives an instruction signal outputted from the below-described reduction ratio switching device 66, and moves the shift fork 63b by air pressure between the low-reduction transmission position and the high-reduction transmission position accordingly.

The end portion of the transmission shaft 63a on the side opposite that of the transmission gears 61e, 62e is connected to the wheel shaft 4, with a conversion unit (not shown in the figure) being interposed therebetween. The conversion unit (not shown in the figure) is similar to the conversion unit described in the first embodiment. The conversion unit converts the rotation power of the transmission shaft 63a into the power of rotation about a horizontal axis extending in the transverse direction of the vehicle, and transmits the converted rotation power to the wheel shaft 4. As a result, when the transmission shaft 63a is connected by the shift fork 63b to the low-reduction transmission gear 61e, the drive power reduced at the low reduction ratio in the first gear device 61 is transmitted to the wheel shaft 4 via the transmission shaft 63a and the conversion unit. When the transmission shaft 63a is connected by the shift fork 63b to the high-reduction transmission gear 62e, the drive power reduced at the high reduction ratio in the second gear device 62 is transmitted to the wheel shaft 4 via the transmission shaft 63a and the conversion unit.

The hydraulic traveling vehicle of the third embodiment is also provided with a reduction ratio switching device 66. The reduction ratio switching device 66 has a main body portion 66a and a reduction ratio switching unit 66b. The reduction ratio switching device 66 outputs an instruction signal to the shift fork drive unit 63c when the reduction ratio switching unit 66b is switched to the high-reduction designation position or low-reduction designation position.

More specifically, the reduction ratio switching unit 66b is composed of an operation lever operated by the operator and mounted on the main body portion 66a to enable switching between the high-reduction designation position and low-reduction designation position. The high-reduction designation position is a position for designating that the drive power reduced at the high reduction ratio by the reducer 30 be transmitted to the wheel shaft 4, and the low-reduction designation position is a position for designating that the drive power reduced at the low reduction ratio by the reducer 30 be transmitted to the wheel shaft 4. The reduction ratio switching unit 66b is mounted on the main body portion 32a so that the reduction ratio switching unit can be thrown to one side and to the other side (opposite to the one side) with respect to a neutral position. When the reduction ratio switching unit 66b is thrown to one side from the neutral position, the reduction ratio switching unit 66b assumes the high-reduction designation position, and when the reduction ratio switching unit 66b is thrown to the other side from the neutral position, the reduction ratio switching unit 66b assumes the low-reduction designation position. When the low-reduction ratio switching unit 66b is switched to the high-reduction designation position, the main body portion 66a outputs to the shift fork drive unit 63c of the transmission unit 63 a high-reduction instruction signal for instructing the transmission unit 63 to assume the high-reduction state, and when the low-reduction ratio switching unit 66b is switched to the low-reduction designation position, the main body portion 66a outputs to the shift fork drive unit 63c of the transmission unit 63 a low-reduction instruction signal for instructing the transmission unit 63 to assume the low-reduction state. The shift fork drive unit 63c receives the high-reduction instruction signal and thereby moves the shift fork 63b to the high-reduction transmission position, or receives the low-reduction instruction signal and thereby moves the shift fork 63b to the low-reduction transmission position.

Other features and operations of the hydraulic traveling vehicle according to the third embodiment are similar to those of the first embodiment.

As described hereinabove, in the third embodiment, the operator can select a high reduction ratio or a low reduction ratio by operating the reduction ratio switching unit 66b, and the drive power reduced by the reducer 30 at the selected reduction ratio can be transmitted to the wheel shaft 4. As a result, the operator can select either of the high reduction ratio and the low reduction ratio and cause the vehicle to travel at the selected reduction ratio.

Fourth Embodiment

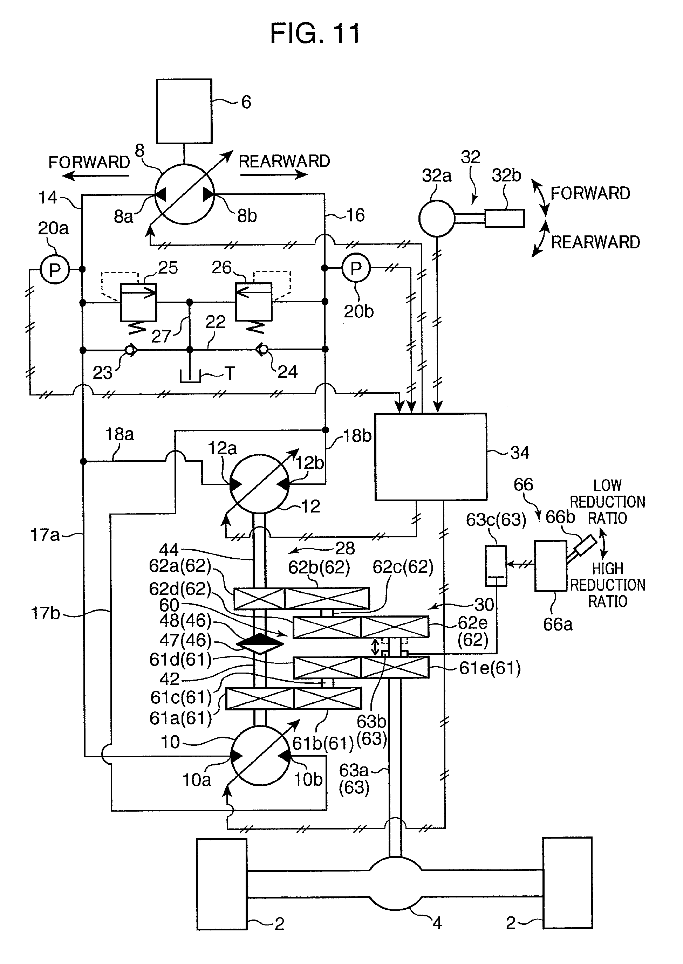

The configuration of the hydraulic traveling vehicle according to the fourth embodiment of the present invention will be described below with reference to FIG. 11.

In the hydraulic traveling vehicle of the fourth embodiment, the second gear device 62 of the reducer 60 of the transmission mechanism 30 is provided at the second rotating shaft 44.

More specifically, the high-reduction main drive gear 62a of the second gear device 62 is provided at the second rotating shaft 44. The high-reduction main drive gear 62a is externally fitted on and fixed to the second rotating shaft 44 in a state of being disposed coaxially with the second rotating shaft 44. The high-reduction main drive gear 62a rotates together with the second rotating shaft 44.

Further, in the fourth embodiment, where the control device 34 decreases the capacity of the second hydraulic motor 12 as the vehicle speed rises, and the rotation speed of the second hydraulic motor 12 and the second rotating shaft 44 is thereby decreased, the rotation speed of the high-reduction main drive gear 62a decreases. Further, the rotation speed of the second engagement portion 48 of the clutch 46 in the rotation direction causing the vehicle to move forward decreases below the rotation speed of the first engagement portion 47 in the same rotation direction, the clutch 46 is thereby disengaged, and the first engagement portion 47 idles with respect to the second engagement portion 48. Where the capacity of the second hydraulic motor 12 is thereafter reduced to zero and the drive of the second hydraulic motor 12 stops, the high-reduction main drive gear 62a stops rotating. As a result, drive of the second gear device 62 is stopped.

Other features and operations of the hydraulic traveling vehicle according to the fourth embodiment are similar to those of the third embodiment.

As described hereinabove, in the fourth embodiment, after the first engagement portion 47 of the clutch 46 becomes idle with respect to the second engagement portion 48, drive of the second gear device 62 stops following the actuation stop of the second hydraulic motor 12, second rotating shaft 44, and second engagement portion 48. As a result, subsequent idle loss of the second gear device 62 can be prevented and degradation of fuel consumption can be inhibited.

Fifth Embodiment

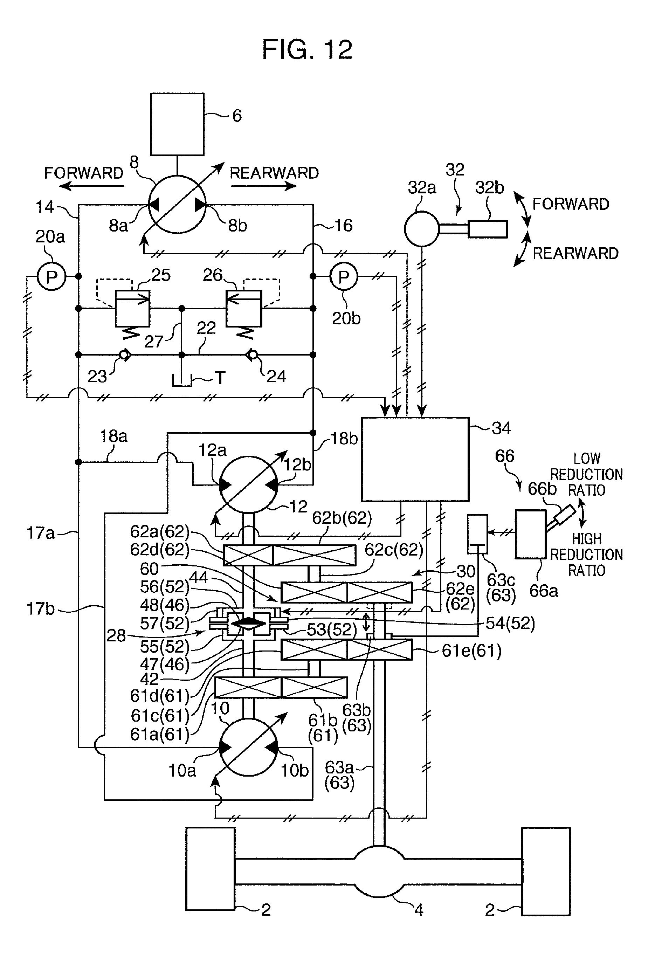

The configuration of the hydraulic traveling vehicle according to the fifth embodiment of the present invention will be described below with reference to FIG. 12.

The hydraulic traveling vehicle according to the fifth embodiment has a configuration obtained by adding the transmission mechanism 30 having the reducer 60 similar to that of the fourth embodiment to the configuration of the hydraulic traveling vehicle provided with the combining mechanism 28 having the first clutch 46a and the second clutch 52 according to the second embodiment.

More specifically, in the fifth embodiment, the low-reduction main drive gear 61a of the first gear device 61 of the reducer 60 is mounted on a portion of the first rotating shaft 42 that is positioned on the first hydraulic motor 10 side with respect to a portion where the one-side support portion 55 of the second clutch 52 is provided. Further, the high-reduction main drive gear 62a of the second gear device 62 of the reducer 60 is mounted on a portion of the second rotating shaft 44 that is positioned on the second hydraulic motor 12 side with respect to a portion where the other-side support portion 56 of the second clutch 52 is provided.

Other features of the hydraulic traveling vehicle according to the fifth embodiment are similar to those of the hydraulic traveling vehicle according to the second embodiment and those of the hydraulic traveling vehicle according to the fourth embodiment.

The operation of portions of the hydraulic traveling vehicle according to the fifth embodiment that relate to the combining mechanism 28 is similar to that of the second embodiment, and the operation of portions relating to the transmission mechanism 30 is similar to that of the fourth embodiment. Therefore, in the fifth embodiment, the drive power of the second hydraulic motor 12 can be transmitted to the wheel shaft 4 when the vehicle moves rearward. As a result, the following effects can be obtained: the drive power of the second hydraulic motor 12 can be used together with the drive power of the first hydraulic motor 10 for moving the vehicle rearward, the operator can select either of the high reduction ratio and the low reduction ratio and cause the vehicle to travel at the selected reduction ratio, and the degradation of fuel consumption caused by idle loss of the second gear device 62 can be inhibited.

Sixth Embodiment

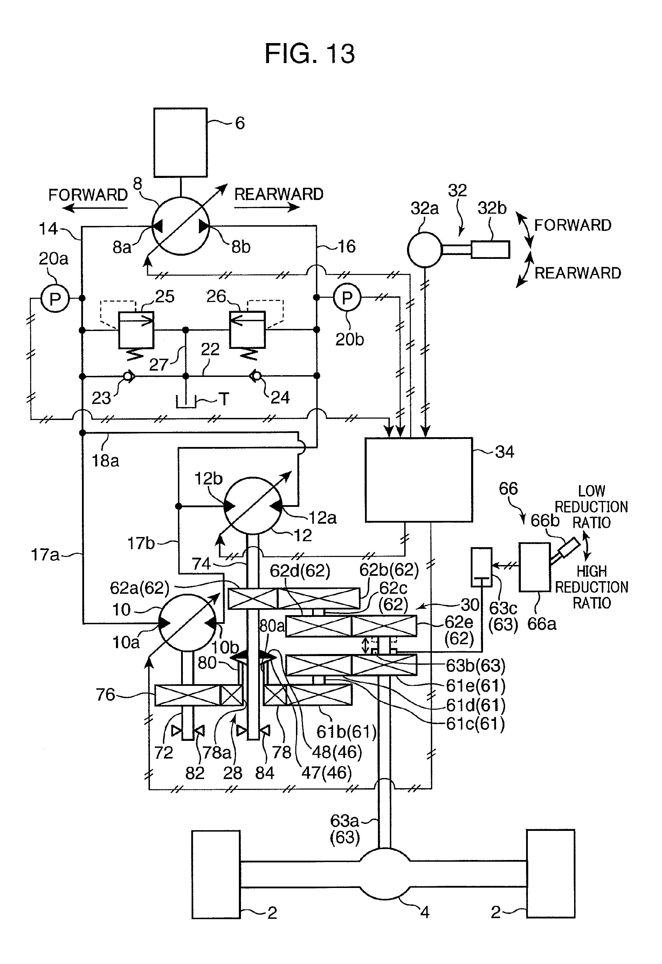

The configuration of the hydraulic traveling vehicle according to the sixth embodiment of the present invention will be described below with reference to FIG. 13.

In the hydraulic traveling vehicle according to the sixth embodiment, a first output shaft 72 connected to the first hydraulic motor 10 and a second output shaft 74 connected to the second hydraulic motor 12 are not disposed coaxially. Further, in the sixth embodiment, the drive power of the first hydraulic motor 10 is transmitted from the first output shaft 72 to the first engagement portion 47 of the clutch 46 via a transmission gear 76, an intermediate gear 78, and a connection shaft portion 80.

More specifically, in the sixth embodiment, the combining mechanism 28 has the first output shaft 72, second output shaft 74, transmission gear 76, intermediate gear 78, connection shaft portion 80, and clutch 46.

The first output shaft 72 receives drive power outputted from the first hydraulic motor 10 and rotates following the drive of the first hydraulic motor 10. The first output shaft 72 extends from the first hydraulic motor 10 in the longitudinal direction of the vehicle. A distal end portion of the first output shaft 72 is rotatably supported by a first bearing 82.

The second output shaft 74 receives the drive power outputted from the second hydraulic motor 12 and rotates following the drive of the second hydraulic motor 12. The second output shaft 74 is included in the concept of the "second rotating shaft" in accordance with the present invention. The second output shaft 74 extends from the second hydraulic motor 12 in the same direction as the first output shaft 72. A distal end portion of the second output shaft 74 is rotatably supported by a second bearing 84. The second output shaft 74 is not disposed coaxially with the first output shaft 72. The second output shaft 74 is disposed apart from the first output shaft 72 and so as to be parallel to the first output shaft 72.

The transmission gear 76 is mounted on the first output shaft 72. The transmission gear 76 is fitted externally on and fixed to the first output shaft 72 in a state of being disposed coaxially with the first output shaft 72. As a result, the transmission gear 76 and rotates integrally with the first output shaft 72.

The intermediate gear 78 meshes with the transmission gear 76. As a result, the intermediate gear 78 rotates by receiving rotation power of the transmission gear 76.

The connection shaft portion 80 connects the intermediate gear 78 and the first engagement portion 47 of the clutch 46. The connection shaft portion 80 is included in the concept of the "first rotating shaft" in accordance with the present invention. Since the intermediate gear 78 and the first engagement portion 47 are connected by the connection shaft portion 80, the intermediate gear 78, connection shaft portion 80, and first engagement portion 47 rotate integrally.

The intermediate gear 78, connection shaft portion 80, and first engagement portion 47 are disposed coaxially. The intermediate gear 78 is provided with a through hole 78a that passes through the intermediate gear 78 in the axial direction thereof. The through hole 78a is provided to be coaxial with the axial center of the intermediate gear 78. The connection shaft portion 80 is provided with a through hole 80a that passes through the connection shaft portion 80 in the axial direction thereof. The through hole 80a is provided to be coaxial with the axial center of the connection shaft portion 80. Further, the first engagement portion 47 is provided with a through hole that passes through the first engagement portion 47 in the axial direction thereof. The through hole is provided to be coaxial with the first engagement portion 47. The second output shaft 74 is inserted into the through hole 78a of the intermediate gear 78, the through hole 80a of the connection shaft portion 80, and the through hole of the first engagement portion 47. The through hole 78a of the intermediate gear 78, the through hole 80a of the connection shaft portion 80, and the through hole of the first engagement portion 47 have inner diameters larger than the outer diameter of the second output shaft 74. As a result, the second output shaft 74 is inserted with a certain play into the through holes. Therefore, the second output shaft 74 can rotate, without mutual interference, relative to the intermediate gear 78, connection shaft portion 80, and first engagement portion 47.

The second engagement portion 48 of the clutch 46 is provided with a through hole passing in the axial direction thereof. The second output shaft 74 is inserted into the through hole of the second engagement portion 48 and in this state the second engagement portion 48 and the second output shaft 74 are joined together. As a result, the second outpour shaft 74 and the second engagement portion 48 rotate integrally about the same axis.

Further, in the sixth embodiment, the intermediate gear 78 also functions as a low-reduction main drive gear of the first gear device 61 of the reducer 60. Thus, the low-reduction driven gear 61b of the first gear device 61 meshes with the intermediate gear 78 and rotates by receiving rotation of the intermediate gear 78. The number of teeth of the low-reduction driven gear 61 b is slightly larger than the number of teeth of the intermediate gear 78 and is a number of teeth such that the rotation of the intermediate gear 78 can be reduced at a desired low reduction ratio.

The high-reduction main drive gear 62a of the second gear device 62 is externally fitted on and fixed to the second output shaft 74. As a result, the high-reduction main drive gear 62a rotates integrally with the second output shaft 74.

Other features of the hydraulic traveling vehicle according to the sixth embodiment are similar to those of the hydraulic traveling vehicle according to the fourth embodiment.

Further, in the sixth embodiment, the drive power of the first hydraulic motor 10 is transmitted from the first output shaft 72 to the first engagement portion 47 of the clutch 46 via the transmission gear 76, intermediate gear 78, and connection shaft portion 80. By contrast, the drive power of the second hydraulic motor 12 is transmitted to the second engagement portion 48 of the clutch 46 via the second output shaft 74. When the clutch 46 is in the engaged state, the drive power of the first hydraulic motor 10 and the driver power of the second hydraulic motor 12 are combined via the clutch 46. When the clutch 46 is in the disengaged state, the first engagement portion 47 idles with respect to the second engagement portion 48. As a result, the dive power of the second hydraulic motor 12 is not combined with the drive power of the first hydraulic motor 10. As a result, only the drive power of the first hydraulic motor 10 is transmitted from the intermediate gear 78 to the low-reduction driven gear 61 b.

Other operations of the hydraulic traveling vehicle according to the sixth embodiment are similar to those of the fourth embodiment.

As described hereinabove, in the sixth embodiment, the first output shaft 72 and the second output shaft 74 are not disposed coaxially and are provided separately from each other. Distal ends of these output shafts 72, 74 are supported by respective bearings 82, 84. Therefore, the output shaft 72, 74 can be strongly supported and the rigidity of the output shafts 72, 74 can be increased.

The embodiments disclosed herein should be construed as being exemplary in all of the aspects thereof and not limiting. The scope of the present invention is represented by the claims, rather that by the explanation of the above-described embodiments, and includes all the variations performed without departing from the claims and within the meaning and scope of equivalents.

For example, the clutch 46 and the first clutch 46a are not limited to the structures shown in FIG. 2. Thus, any clutches may be used, provided that they have structures such that when the rotation speed of the second engagement portion of the clutch in the rotation direction causing the hydraulic traveling vehicle to move forward increases and reaches the rotation speed equal to the rotation speed of the first engagement portion in the same rotation direction, the first engagement portion of the clutch rotates integrally with the second engagement portion, but when the rotation speed of the second engagement portion in the rotation direction causing the hydraulic traveling vehicle to move forward decreases below the rotation speed of the first engagement portion in the same rotation direction, the first engagement portion idles with respect to the second engagement portion.

**Claims**

1.  A hydraulic traveling vehicle comprising:

    an engine;
    wheels;
    a wheel shaft connected to the wheels;
    a hydraulic pump driven by the engine and thereby discharging a hydraulic oil;
    a first hydraulic motor and a second hydraulic motor actuated by a hydraulic pressure of the hydraulic oil discharged from the hydraulic pump and thereby generating drive power;
    a combining mechanism that can combine drive power generated by the first hydraulic motor and drive power generated by the second hydraulic motor; and
    a transmission mechanism that transmits drive power obtained from the combining mechanism to the wheel shaft so as to rotate the wheel shaft and the wheels, wherein
    the second hydraulic motor is a variable displacement hydraulic motor that has a variable capacity,
    the combining mechanism includes a first rotating shaft that is connected to the transmission mechanism and is rotated by drive power generated by the first hydraulic motor, a second rotating shaft that is disposed coaxially with the first rotating shaft and is rotated in the same rotation direction as the first rotating shaft by drive power generated by the second hydraulic motor, and a first clutch having a first engagement portion that is joined to the first rotating shaft so as to rotate integrally with the first rotating shaft and a second engagement portion that is joined to the second rotating shaft so as to rotate integrally with the second rotating shaft,
    the first engagement portion and the second engagement portion can rotate in a rotation direction causing the hydraulic traveling vehicle to move forward when rotation powers of the first engagement portion and the second engagement portion are transmitted to the wheels, and
    the first engagement portion is disposed with respect to the second engagement portion in such a manner that when a rotation speed of the second engagement portion in the rotation direction causing the hydraulic traveling vehicle to move forward increases and reaches a rotation speed equal to a rotation speed of the first engagement portion in the same rotation direction, the first engagement portion rotates integrally with the second engagement portion, while, when the rotation speed of the second engagement portion in the rotation direction causing the hydraulic traveling vehicle to move forward is below the rotation speed of the first engagement portion in the same rotation direction, the first engagement portion idles with respect to the second engagement portion.

2.  The hydraulic traveling vehicle according to claim 1, wherein
    the first engagement portion and the second engagement portion can rotate in a rotation direction that is opposite to the rotation direction causing the hydraulic traveling vehicle to move forward and that causes the hydraulic traveling vehicle to move rearward when rotation powers of the first engagement portion and the second engagement portion are transmitted to the wheels,
    when a rotation speed of the first engagement portion in the rotation direction causing the hydraulic traveling vehicle to move rearward increases and reaches a rotation speed equal to a rotation speed of the second engagement portion in the same rotation direction, the second engagement portion rotates integrally with the first engagement portion, while when the rotation speed of the first engagement portion in the rotation direction causing the hydraulic traveling vehicle to move rearward is below the rotation speed of the second engagement portion in the same rotation direction, the second engagement portion idles with respect to the first engagement portion,
    the combining mechanism includes, in addition to the first clutch, a second clutch that is provided so as to straddle the first rotating shaft and the second rotating shaft and is switched between an engaged state in which the first rotating shaft and the second rotating shaft are connected and a disengaged state in which the first rotating shaft and the second rotating shaft are disconnected,
    the hydraulic traveling vehicle further includes a forward-rearward switching unit that can be switched between a forward position for designating forward movement of the hydraulic traveling vehicle and rearward position for designating rearward movement of the hydraulic traveling vehicle, and a control device that sends, to the second clutch, a disengaged state instruction signal for instructing the second clutch to assume the disengaged state in response to switching of the forward-rearward switching unit to the forward position and sends, to the second clutch, an engaged state instruction signal for instructing the second clutch to assume the engaged state in response to switching of the forward-rearward switching unit to the rearward position, and
the second clutch assumes the disengaged state when the disengaged state instruction signal is inputted and assumes the engaged state when the engaged state instruction signal is inputted.

3. The hydraulic traveling vehicle according to claim 1 or 2, wherein
the transmission mechanism includes a reducer that reduces speed given by the drive power obtained from the combining mechanism at a predetermined high reduction ratio and at a low reduction ratio that is a reduction ratio lower than the high reduction ratio, and a transmission unit that is switched between a high-reduction transmission state for transmitting drive power reduced by the reducer at the high reduction ratio to the wheel shaft and a low-reduction transmission state for transmitting drive power reduced at the low reduction ratio to the wheel shaft,
the hydraulic traveling vehicle further comprises a reduction ratio switching device that has a reduction ratio switching unit capable of being switched between a high-reduction designation position and a low-reduction designation position, that outputs, to the transmission unit, a high-reduction instruction signal for instructing the transmission unit to assume the high-reduction transmission state in response to switching of the reduction ratio switching unit to the high-reduction designation position, and that outputs, to the transmission unit, a low-reduction instruction signal for instructing the transmission unit to assume the low-reduction transmission state in response to switching of the reduction ratio switching unit to the low-reduction designation position, and
the transmission unit assumes the high-reduction transmission state when the high-reduction instruction signal is inputted and assumes the low-reduction transmission state when the low-reduction instruction signal is inputted.

4. The hydraulic traveling vehicle according to claim 3, wherein
the reducer includes a first gear device mounted on the first rotating shaft and serving to reduce speed given by the rotation power of the first rotating shaft at the low reduction ratio, and a second gear device mounted on the second rotating shaft and serving to reduce speed given by the rotation power of the second rotating shaft at the high reduction ratio, and
when the transmission unit is in the low-reduction transmission state, the transmission unit is joined to the first gear device so as to transmit the rotation power that its speed is reduced by the first gear device from the first gear device to the wheel shaft, and when the transmission device is in the high-reduction transmission state, the transmission unit is joined to the second gear device so as to transmit the rotation power that its speed is reduced by the second gear device from the second gear device to the wheel shaft.

5. The hydraulic traveling vehicle according to any one of claims 1 to 4, further comprising:

   a supply pipe connected to a discharge port of the hydraulic pump;
   a first introducing pipe connected to the supply pipe and introducing the hydraulic oil discharged from the hydraulic pump to the supply pipe, into the first hydraulic motor, and
   a second introducing pipe connected to the supply pipe and introducing the hydraulic oil discharged from the hydraulic pump to the supply pipe, into the second hydraulic motor.

# FIG. 1

# FIG. 2

CAPACITY OF FIRST
HYDRAULIC MOTOR

$q1_{max}$

$q1_{min}$

P3   P4   PRESSURE INSIDE
FIRST PIPE

# FIG. 3

CAPACITY OF SECOND
HYDRAULIC MOTOR

$q2_{max}$

$q2_{min}=0$

P1   P2   PRESSURE INSIDE
FIRST PIPE

FIG. 4A

VEHICLE SPEED

TIME

FIG. 4B

PRESSURE INSIDE PIPE

P1

TIME

FIG. 4C

CAPACITY OF FIRST HYDRAULIC MOTOR

$q1_{max}$

$q1_{min}$

TIME

FIG. 4D

CAPACITY OF SECOND HYDRAULIC MOTOR

$q2_{max}$

$q2_{min}$

TIME

FIG. 4E

ROTATION SPEED

OUTPUT SHAFT OF FIRST HYDRAULIC MOTOR AND FIRST ROTATING SHAFT

OUTPUT SHAFT OF SECOND HYDRAULIC MOTOR AND SECOND ROTATING SHAFT

TIME

FIG. 4F

STATE OF CLUTCH

ENGAGED

DISENGAGED

TIME

t1

FIG. 5A

VEHICLE SPEED

TIME

FIG. 5B

PRESSURE INSIDE PIPE

P1

TIME

FIG. 5C

CAPACITY OF FIRST HYDRAULIC MOTOR

$q1_{max}$

$q1_{min}$

TIME

FIG. 5D

CAPACITY OF SECOND HYDRAULIC MOTOR

$q2_{max}$

$q2_{min}$

TIME

FIG. 5E

ROTATION SPEED

OUTPUT SHAFT OF FIRST HYDRAULIC MOTOR AND FIRST ROTATING SHAFT

TIME

OUTPUT SHAFT OF SECOND HYDRAULIC MOTOR AND SECOND ROTATING SHAFT

FIG. 5F

STATE OF CLUTCH

ENGAGED

DISENGAGED

TIME

t2

# FIG. 6

# FIG. 7

# FIG. 8

# FIG. 9

# FIG. 10

# FIG. 11

# FIG. 12

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4501992 PCT
- JP 2001336602 A
- JP H526264 B
- JP H8338450 B